# EUROPEAN PATENT SPECIFICATION

(11) **EP 2 977 348 B1**
(45) Date of publication and mention of the grant of the patent: **17.01.2018**
(21) Application number: 14770321.9
(22) Date of filing: 10.03.2014
(51) Int. Cl.: C01B 3/38, H01M 8/04, H01M 8/06, H01M 8/10, H01M 8/0612, H01M 8/0662, H01M 8/0432, H01M 8/04701

(54) **HYDROGEN GENERATOR, FUEL CELL SYSTEM INCLUDING HYDROGEN GENERATOR, METHOD OF OPERATING HYDROGEN GENERATOR, AND METHOD OF OPERATING FUEL CELL SYSTEM**
WASSERSTOFFERZEUGUNGSVORRICHTUNG, BRENNSTOFFZELLENSYSTEM DAMIT, VERFAHREN ZUM BETREIBEN DER WASSERSTOFFERZEUGUNGSVORRICHTUNG UND VERFAHREN ZUM BETREIBEN DES BRENNSTOFFZELLENSYSTEMS
APPAREIL GÉNÉRATEUR D'HYDROGÈNE, SYSTÈME DE PILE À COMBUSTIBLE LE COMPRENANT, ET PROCÉDÉ DE FONCTIONNEMENT DE L'APPAREIL GÉNÉRATEUR D'HYDROGÈNE ET DU SYSTÈME DE PILE À COMBUSTIBLE

(30) Priority: 19.03.2013 JP 2013056330
(43) Date of publication of application: 27.01.2016
(73) Proprietor: Panasonic Intellectual Property Management Co., Ltd., Osaka-shi, Osaka 540-6207 (JP)
(72) Inventor: MUKAI, Yuji, Osaka 540-6207 (JP); TAKEUCHI, Tomoya, Osaka 540-6207 (JP)
(74) Representative: Grünecker Patent- und Rechtsanwälte PartG mbB
(86) International application number: PCT/JP2014/001312
(87) International publication number: WO 2014/147991

(56) References cited:
- JP-A- 2003 197 246
- JP-A- 2003 197 246
- JP-A- 2010 235 376
- JP-A- 2010 235 376
- JP-A- 2012 116 666
- US-A- 5 932 181

## Description

### Technical Field

The present invention relates to a fuel cell power generation device which generates electric power by using a hydrocarbon compound raw material as a raw material. More particularly, the present invention relates to a hydrogen generator including a hydrodesulfurization unit which removes a sulfur compound which is detrimental to the hydrogen generator, through a hydrogenation reaction.

### Background Art

A fuel cell power generation device includes a fuel cell, a hydrogen generator which supplies a fuel gas containing hydrogen to the fuel cell, an inverter circuit which converts DC power generated in the fuel cell into AC power, a controller which controls these components, etc.. Several methods are employed in a hydrogen generation unit (reformer) used in the hydrogen generator. Among the methods, a steam reforming method in which the hydrocarbon compound as the raw material and steam catalytically react with each other at a high temperature to generate hydrogen, is mainly employed.

As the raw material, a city gas including a natural gas, a LP gas, heating oil, a biogas, etc., are used. These materials contain a sulfur compound added as an odorant, or a sulfur compound originally existing in the raw materials. These sulfur compounds poison a catalyst used in the hydrogen generation unit, and as a result, its activity is lost. To avoid this, it is necessary to remove the sulfur compound from the raw material, by using a desulfurization unit before the raw material is supplied to the hydrogen generation unit.

At present, the desulfurization unit employs two methods which are an adsorptive desulfurization method and a hydrodesulfurization method. For example, as disclosed in Patent Literature 1, the adsorptive desulfurization method is such that the desulfurization is performed by flowing a raw material into a packed bed filled with an adsorbent which adsorbs the sulfur compound. The adsorptive desulfurization method has an advantage that a treatment can be performed very easily. However, since the adsorbing capacity of the adsorptive desulfurization is low, the desulfurization unit is replaced with a high frequency, which increases cost.

In contrast, for example, as disclosed in Patent Literature 2, the hydrodesulfurization method is such that hydrogen is added to the raw material to cause a hydrogenation reaction which converts the sulfur compound into hydrogen sulfide which is easily adsorbed, and the generated hydrogen sulfide is adsorbed onto an adsorbent to be removed. The hydrodesulfurization method has an advantage that the adsorbing capacity is high, and therefore a replacement of the adsorbent is not necessary. However, the hydrodesulfurization method has a drawback that it is necessary to raise the temperature of the desulfurization unit to a proper one which is equal to or higher than about 200 degrees C and equal to or lower than about 300 degrees C and keep the desulfurization unit at this temperature so that the hydrogenation reaction and the adsorption to proceed.

A cylindrical steam reformer integrated with a hydrodesulfurization unit, disclosed in Patent Literature 2, includes a plurality of cylindrical bodies composed of a first cylindrical body, a second cylindrical body, and a third cylindrical body which are placed to be spaced apart in a concentric manner, a burner disposed in the radial center portion of the first cylindrical body, and a reforming catalyst layer (bed) filled with reforming catalyst in a space which is radially defined by the first cylindrical body and the second cylindrical body, and a heat insulating layer is disposed around a portion of the outer periphery of the third cylindrical body, on which portion the reforming catalyst layer is located, and a hydrodesulfurization unit is disposed around the outer periphery of the heat insulating layer.

In a reformer disclosed in Patent Literature 2, the heating temperature of the hydrodesulfurization unit is controlled by suitably selecting the kind and thickness of a heat insulating material.

Patent Literature 3 discloses a fuel cell system including a reformer, a desulfurization apparatus and a fuel cell stack. The desulfurization apparatus includes a desulfurizer containing a desulfurization catalyst that removes a sulfur content from a liquid fuel, a heater for heating the liquid fuel in the desulfurizer, a thermometer for measuring the temperature of the desulfurization catalyst in the desulfurizer, a power supply applying a voltage to the heater, and a control unit for controlling the power supply. The reformer comprises a steam reformer and a burner for heating the steam reformer by combustion of the desulfurized fuel with air. The control unit controls the power supply to apply 200 V voltage to the heater after starting to operate until the temperature measured by the thermometer reaches the target temperature of normal operation. After the temperature measured by the thermometer has reached the target temperature of normal operation, the control unit controls the power supply to apply 100 V voltage to the heater.

### Citation List

### Patent Literature

Patent Literature 1: Japanese Laid-Open Patent Application Publication No. 2003-020489
Patent Literature 2: Japanese Laid-Open Patent Application Publication No. 2010-058995
Patent Literature 3: Japanese Laid-open Patent Application Publication No. 2010-235376.

### Summary of Invention

### Technical Problem

However, in the reformer disclosed in Patent Literature 2, due to a change in an ambient temperature and the degradation of the catalytic performance of the reforming catalyst or the like, which progresses over time, it is likely that the temperature of the hydrodesulfurization unit falls outside a proper temperature range. Specifically, for example, with an increase in the ambient temperature, the amount of heat radiated (emitted) from the hydrodesulfurization unit to a surrounding environment is decreased. As a result, the temperature of the hydrodesulfurization unit is likely to be raised, and fall outside the proper temperature range.

The reforming catalyst is degraded with a passage of time. In this situation, to supply hydrogen with an amount required for the fuel cell, it becomes necessary to increase the supply amount of the raw material. With an increase in the supply amount of the raw material, the flow rate of the gas (reformed gas, raw material, and others) flowing through a flow passage of the reformed gas used to heat the hydrodesulfurization unit is increased. As a result, the temperature of the hydrodesulfurization unit is likely to be raised, and fall outside the proper temperature range.

If the temperature of the hydrodesulfurization unit is raised and exceeds about 300 degrees C which is a proper temperature, the hydrodesulfurization catalyst filled into the hydrodesulfurization unit is thermally degraded and its desulfurization performance will be degraded significantly. Conversely, if the ambient temperature is lowered and thereby the temperature of the hydrodesulfurization unit is lowered, its desulfurization performance will also be degraded significantly.

The hydrodesulfurization unit is incorporated into the hydrogen generator. For this reason, it is not easy to replace only the hydrodesulfurization unit with degraded performance. Therefore, if the performance of the hydrodesulfurization unit is degraded, the whole hydrogen generator is in some cases replaced.

The present invention has been made in view of the above stated problems, and an object of the present invention is to provide a hydrogen generator which is capable of maintaining the temperature of a hydrodesulfurization unit in a proper temperature range irrespective of disturbance or changes which occur with a passage of time, a fuel cell system including the hydrogen generator, a method of operating the hydrogen generator, and a method of operating the fuel cell system.

### Solution to Problem

To achieve the above described objet, according to an aspect of the present invention, there is provided a hydrogen generator as defined in claim 1.

In this configuration, it becomes possible to suppress an increase in the temperature of hydrodesulfurization unit up to a temperature which is higher than a proper temperature, and hence degradation of the desulfurization performance of the hydrodesulfurization unit.

A fuel cell system of the present invention is defined in claim 7.

According to the present invention, there is provided a method of operating a hydrogen generator as defined in claim 8.

Furthermore, according to a present invention, there is provided a method of operating a fuel cell system as defined in claim 14. Further advantageous embodiments are defined in the dependent claims.

### Advantageous Effects of Invention

In accordance with a hydrogen generator, a fuel cell system including the hydrogen generator, a method of operating the hydrogen generator, and a method of operating the fuel cell system, of the present invention, the temperature of the hydrodesulfurization unit can be maintained at a proper temperature, and degradation of the performance of the hydrodesulfurization unit can be suppressed.

### Brief Description of Drawings

Fig. 1 is a block diagram showing the schematic configuration of a hydrogen generator according to Embodiment 1.
Fig. 2 is a flowchart showing the outline of the operation of the hydrogen generator according to Embodiment 1.
Fig. 3 is a block diagram showing the schematic configuration of a hydrogen generator according to Embodiment 2.
Fig. 4 is a flowchart showing the outline of the operation of the hydrogen generator according to Embodiment 2.
Fig. 5 is a block diagram showing the schematic configuration of a hydrogen generator according to Modified example 1 of Embodiment 2.
Fig. 6 is a flowchart showing the outline of the operation of a hydrogen generator according to Modified example 2 of Embodiment 2.

supplies the air to the combustor; a hydrodesulfurization unit which removes a sulfur component from the raw material through a hydrogenation reaction; a heater which heats the hydrodesulfurization unit; a desulfurization temperature detector which detects a temperature of the hydrodesulfurization unit; a cooling passage through which at least a part of the air supplied from the air supply unit to the combustor flows, to cool the hydrodesulfurization unit; and a flow regulator provided on the cooling passage to adjust a flow rate of the air flowing through the cooling passage; and a fuel cell which generates electric power by using the reformed gas generated in the hydrogen generator, the method comprising the steps of: (a) determining whether or not the temperature detected by the desulfurization temperature detector is higher than a preset first temperature threshold; and (b) causing a flow rate of the air flowing through the cooling passage to be higher, with the flow regulator, when it is determined that the temperature detected by the desulfurization temperature detector is higher than the first temperature threshold in step (a) than when it is determined that the temperature detected by the desulfurization temperature detector is equal to or lower than the first temperature threshold in step (a).

### Advantageous Effects of Invention

In accordance with a hydrogen generator, a fuel cell system including the hydrogen generator, a method of operating the hydrogen generator, and a method of operating the fuel cell system, of the present invention, the temperature of the hydrodesulfurization unit can be maintained at a proper temperature, and degradation of the performance of the hydrodesulfurization unit can be suppressed.

### Brief Description of Drawings

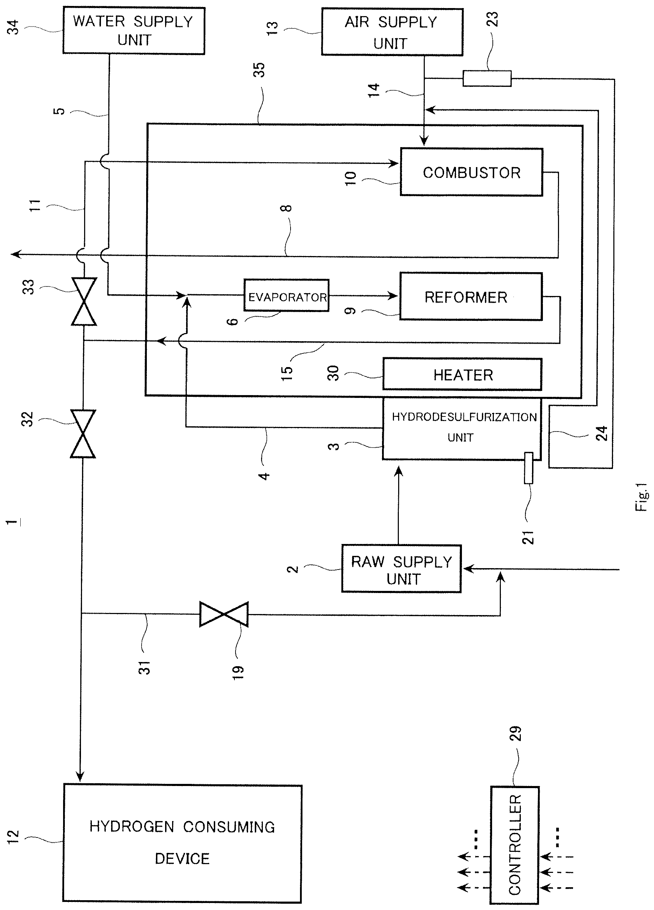

Fig. 1 is a block diagram showing the schematic configuration of a hydrogen generator according to Embodiment 1.

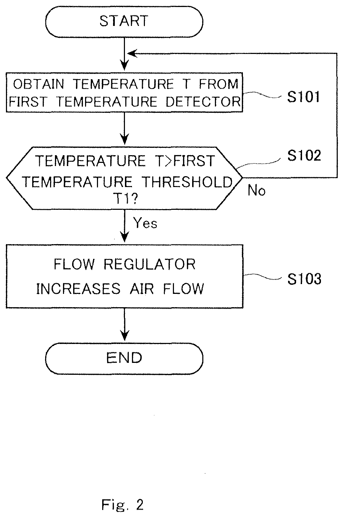

Fig. 2 is a flowchart showing the outline of the operation of the hydrogen generator according to Embodiment 1.

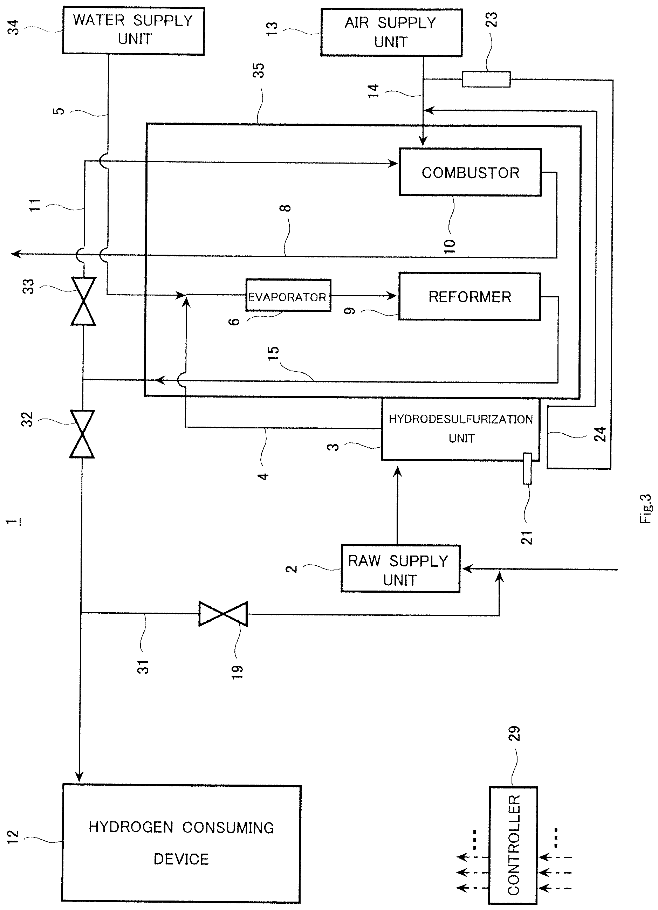

Fig. 3 is a block diagram showing the schematic configuration of a hydrogen generator according to Embodiment 2.

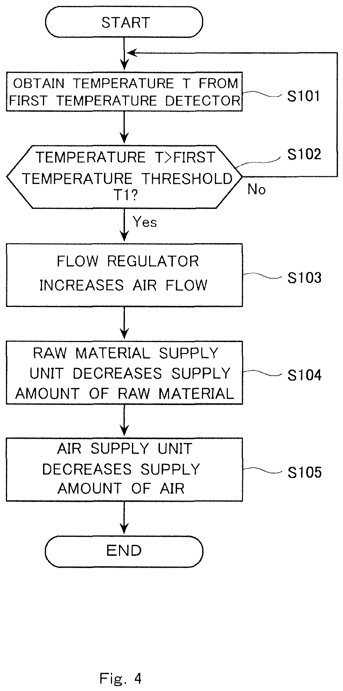

Fig. 4 is a flowchart showing the outline of the operation of the hydrogen generator according to Embodiment 2.

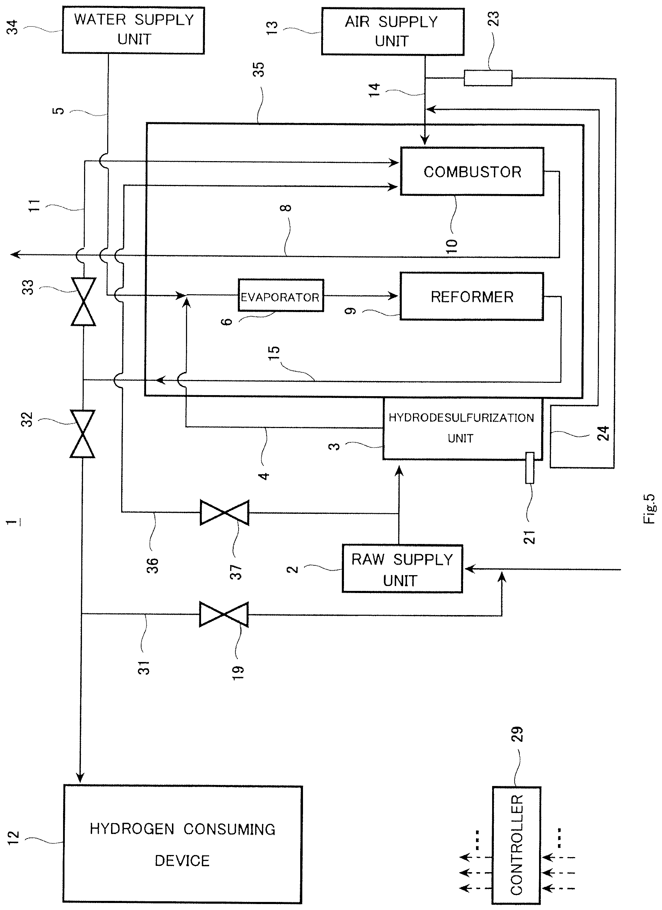

Fig. 5 is a block diagram showing the schematic configuration of a hydrogen generator according to Modified example 1 of Embodiment 2.

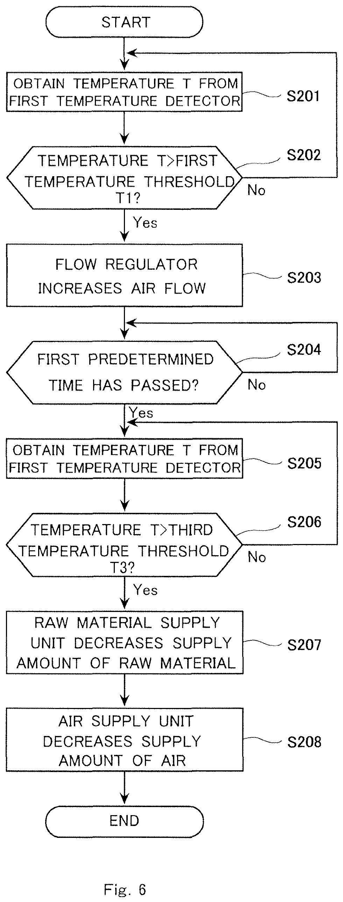

Fig. 6 is a flowchart showing the outline of the operation of a hydrogen generator according to Modified example 2 of Embodiment 2.

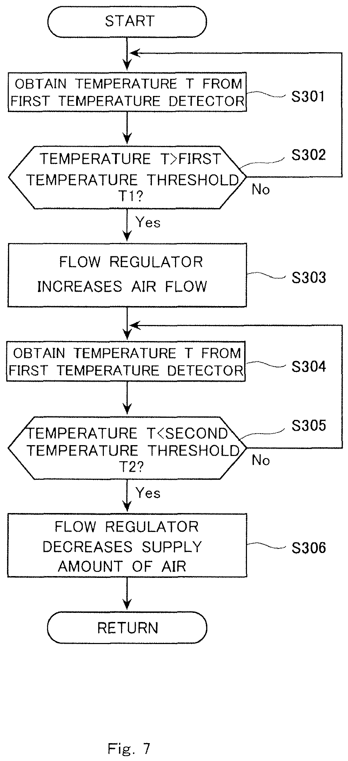

Fig. 7 is a flowchart showing the outline of the operation of a hydrogen generator according to Embodiment 3.

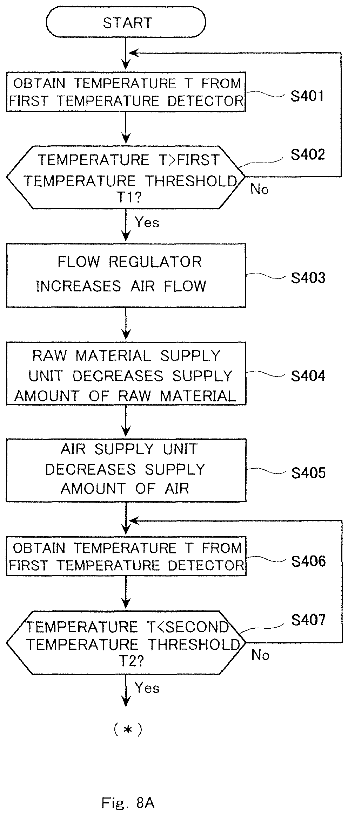

Fig. 8A is a flowchart showing the outline of the operation of a hydrogen generator according to Embodiment 4.

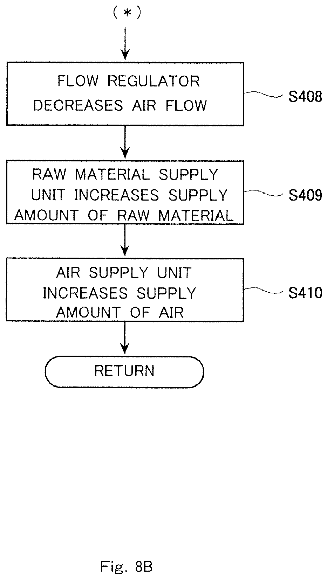

Fig. 8B is a flowchart showing the outline of the operation of the hydrogen generator according to Embodiment 4.

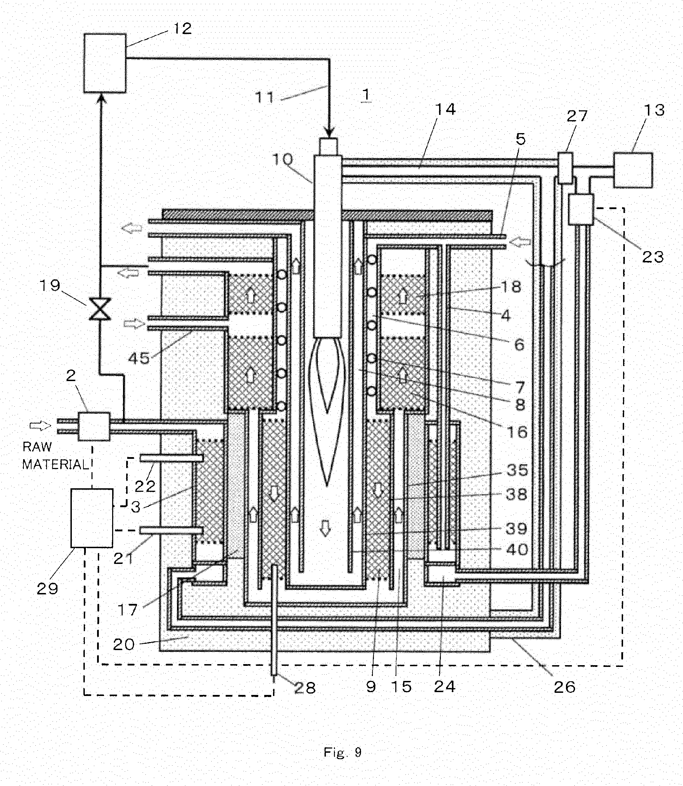

Fig. 9 is a view showing the schematic configuration of a hydrogen generator according to Embodiment 5.

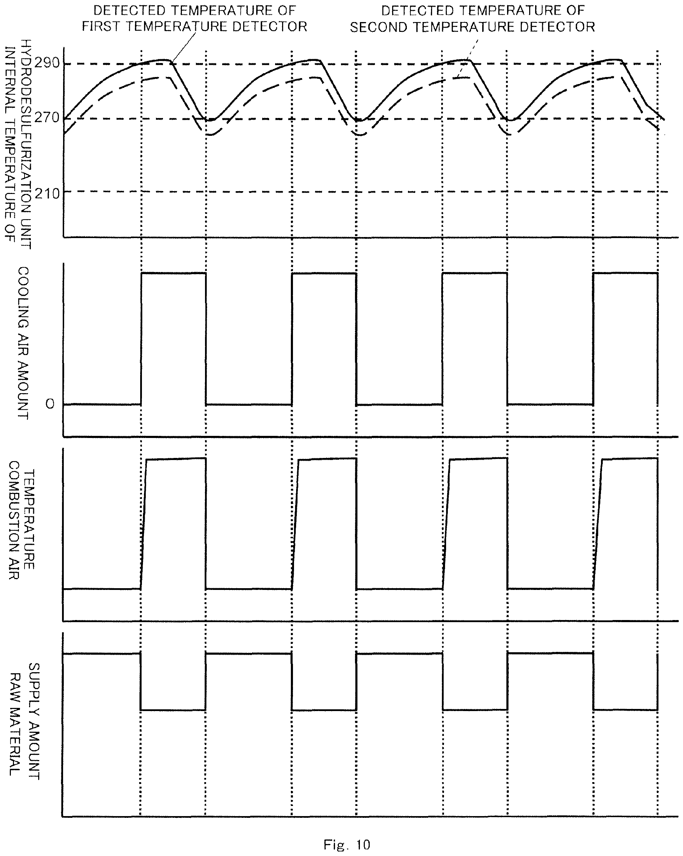

Fig. 10 is a graph showing an example of data in a case where the operation for controlling the temperature of a hydrodesulfurization unit of the hydrogen generator according to Embodiment 5 is performed.

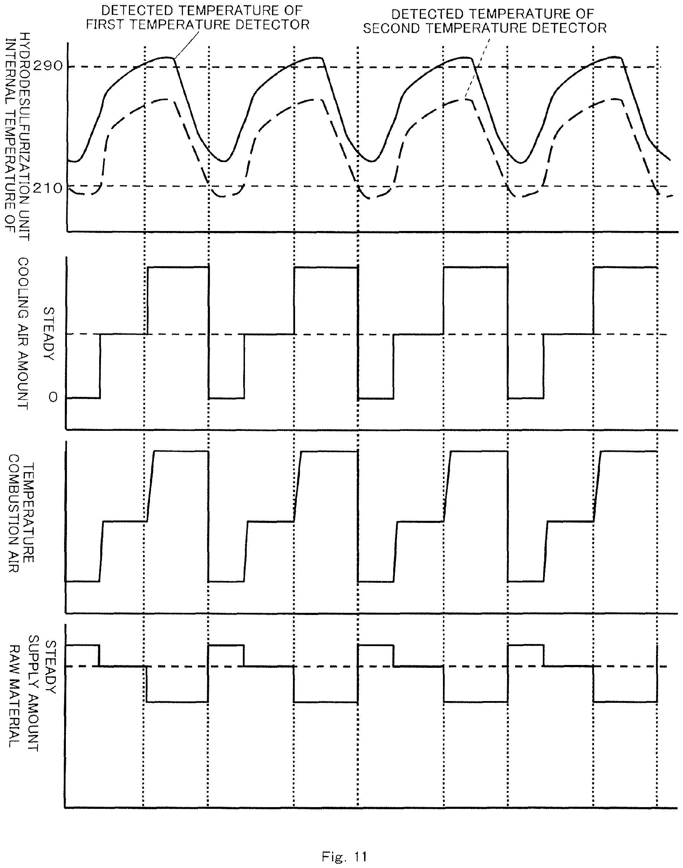

Fig. 11 is a graph showing another example of data in a case where the operation for controlling the temperature of the hydrodesulfurization unit of the hydrogen generator according to Embodiment 5 is performed.

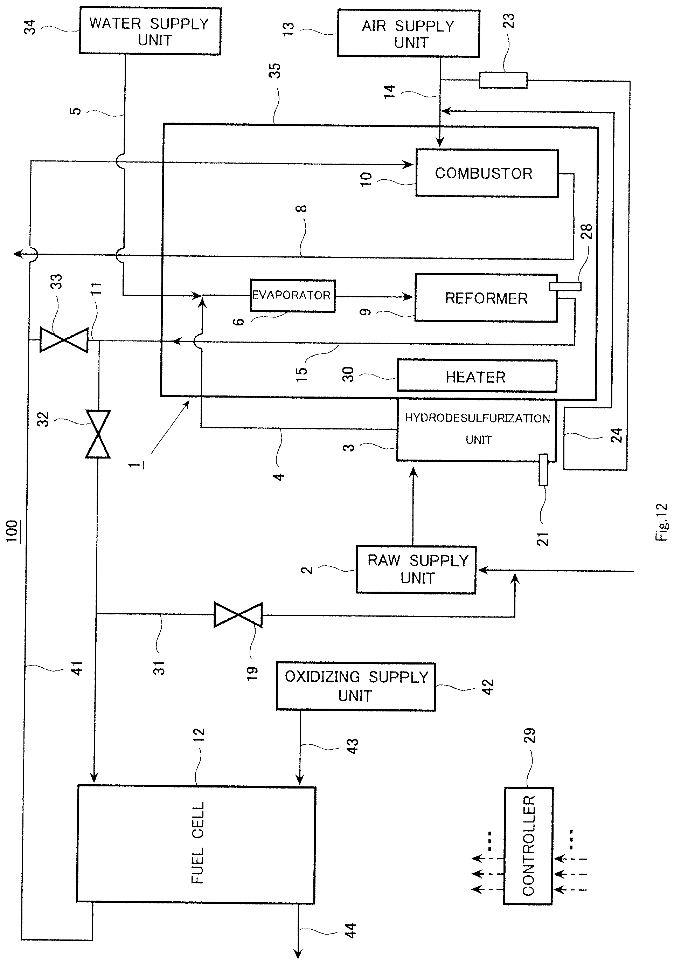

Fig. 12 is a block diagram showing the schematic configuration of a fuel cell system according to Embodiment 6.

### Description of Embodiments

Hereinafter, preferred embodiments of the present invention will be described with reference to the drawings. Throughout the drawings, the same or corresponding components are designated by the same reference symbols and will not be described repeatedly. Throughout the drawings, the elements required to explain the present invention are shown and the other elements are not shown in some cases. Furthermore, the present invention is not limited to the embodiments described below.

### (Embodiment 1)

According to Embodiment 1, a hydrogen generator comprises a reformer which reforms a raw material containing hydrocarbon to generate a reformed gas; a raw material supply unit which supplies a raw material to the reformer; a combustor which combusts a combustion gas which is the raw material or the reformed gas, and air, to heat the reformer; an air supply unit which supplies the air to the combustor; a hydrodesulfurization unit which removes a sulfur component from the raw material through a hydrogenation reaction; a heater which heats the hydrodesulfurization unit; a desulfurization temperature detector which detects a temperature of the hydrodesulfurization unit; a cooling passage through which at least a part of the air supplied from the air supply unit to the combustor flows, to cool the hydrodesulfurization unit; and a controller configured to perform control to cause a flow rate of the air supplied to the cooling passage to be higher, when the temperature detected by the desulfurization temperature detector is higher than a preset first temperature threshold than when the temperature detected by the desulfurization temperature detector is equal to or lower than the first temperature threshold.

Now, an exemplary hydrogen generator according to Embodiment 1 will be described with reference to Figs. 1 and 2.

Fig. 1 is a block diagram showing the schematic configuration of a hydrogen generator according to Embodiment 1.

As shown in Fig. 1, a hydrogen generator 1 according to Embodiment 1 includes a raw material supply unit 2, a hydrodesulfurization unit 3, a reformer 9, a combustor 10, an air supply unit 13, a first temperature detector (desulfurization temperature detector) 21, a flow regulator 23, a cooling passage 24, a heater 30 and a controller 29. The hydrogen generator 1 further includes a casing (housing) 35. The reformer 9, the combustor 10, the heater 30, and others are arranged inside the casing 35. The hydrodesulfurization unit 3 is placed outside the casing 35. The specific configuration of the hydrogen generator 1 will be described later in Embodiment 5.

The raw material supply unit 2 is connected to the hydrodesulfurization unit 3 via a raw material supply passage 4. The upstream end of the raw material supply passage 4 is connected to a gas infrastructure such as a city gas (natural gas), while the downstream end thereof is connected to an evaporator 6. A hydrogen-containing gas passage 31 is connected to the raw material supply passage 4 in a location that is upstream of the raw material supply unit 2. A part of a hydrogen-containing gas generated in the reformer 9 is supplied to hydrodesulfurization unit 3 together with the raw material through the hydrogen-containing gas passage 31.

The raw material supply unit 2 is configured to supply the raw material with an adjusted flow rate to the hydrodesulfurization unit 3. For example, the raw material supply unit 2 may be a single flow control valve, or a combination of a booster pump and the flow control valve.

The raw material contains as an odorant a sulfur compound such as sulfide or mercaptan, for the purpose of leakage detection, in addition to a sulfur component originating in the raw material. As the raw material, a city gas (natural gas) containing methane as a major component, or a LP gas may be used.

The hydrogen-containing gas passage 31 is provided with a flow regulator 19. The flow regulator 19 may be configured in any way so long as the flow regulator 19 is capable of adjusting the flow rate of the hydrogen-containing gas flowing through the hydrogen-containing gas passage 31. For example, the flow regulator 19 may be a flow control valve.

The hydrodesulfurization unit 3 includes catalyst which converts the sulfur compound contained in the raw material into hydrogen sulfide, and catalyst which adsorbs hydrogen sulfide. The first temperature detector 21 is attached to the lower portion of the hydrodesulfurization unit 3. The first temperature detector 21 is configured to detect the temperature of the hydrodesulfurization unit 3 and output the detected temperature to the controller 29. As the first temperature detector 21, a thermistor or the like may be used.

The heater 30 is placed in the vicinity of the hydrodesulfurization unit 3 to heat the hydrodesulfurization unit 3. The heater 30 is constituted by a combustion exhaust gas passage (8), the reformer (9) or the reformed gas passage (15). The heater may also be constituted by a shift converter (see Fig. 9), a selective oxidization unit (see Fig. 9), etc., which are heated by the heat transfer from the combustion exhaust gas passage 8.

In Embodiment 1, the heater 30 is configured to heat the hydrodesulfurization unit 3 in such a manner that the temperature of the lower portion of the hydrodesulfurization unit 3 is higher than that of the upper portion of the hydrodesulfurization unit 3. Specifically, a heat insulating material 17 (see Fig. 9) is disposed in the vicinity of the hydrodesulfurization unit 3 so that the temperature of the lower portion of the hydrodesulfurization unit 3 reaches 290 degrees C and the temperature of the upper portion of the hydrodesulfurization unit 3 reaches 210 degrees C.

The reformer 9 is connected to the hydrodesulfurization unit 3 via the evaporator 6. A water supply unit 34 is connected to the evaporator 6 via a water supply passage 5. The water supply unit 34 may be configured in any way so long as the water supply unit 34 is capable of supplying water with an adjusted flow rate and cutting off the water supply. For example, the water supply unit 34 may be a single flow control valve, or a combination of a pump and the flow control valve. The water supplied to the reformer 9 may be heated by the heat transfer of the combustion exhaust gas generated in the combustor 10, and supplied as steam.

The reformer 9 includes a reforming catalyst. As the reforming catalyst, for example, any material may be used so long as it is able to catalyze a steam reforming reaction which can generate the hydrogen-containing gas from the raw material and the steam. For example, a ruthenium based catalyst in which a catalyst carrier such as alumina carries ruthenium (Ru), a nickel based catalyst in which a similar catalyst carrier carries nickel (Ni), etc., may be used.

The reformer 9 generates the hydrogen-containing gas (reformed gas) through a reforming reaction between the raw material having been desulfurized by the hydrodesulfurization unit 3 and the water (steam) supplied from the water supply unit 34. The generated hydrogen-containing gas is supplied to a hydrogen consuming device (e.g., fuel cell, hydrogen storage tank, etc.) via the reformed gas passage 15.

The reformed gas passage 15 is provided with a first on-off valve 32. The upstream end of the hydrogen-containing gas passage 31 is connected to the reformed gas passage 15 in a location that is downstream of the first on-off valve 32. The combustor 10 is connected to the reformed gas passage 15 in a location that is upstream of the first on-off valve 32, via a bypass passage 11. The bypass passage 11 is provided with a second on-off valve 33. In this configuration, a part of the hydrogen-containing gas generated in the reformer 9 is supplied to the combustor 10 as the combustion gas.

The air supply unit 13 is connected to the combustor 10 via an air supply passage 14. The air supply unit 13 may be configured in any way so long as the air supply unit 13 is capable of supplying the air with an adjusted flow rate to the combustor 10. For example, the air supply unit 13 may be a fan unit such as a fan or a blower.

The combustion exhaust gas passage 8 is connected to the combustor 10. The combustion exhaust gas passage 8 is formed to extend along the reformer 9. The combustor 10 combusts the combustion gas and air to generate the combustion exhaust gas. The combustion exhaust gas generated in the combustor 10 flows through the combustion exhaust gas passage 8 while heating the reformer 9, and thereafter is discharged to outside the hydrogen generator 1.

The cooling passage 24 is connected to the air supply passage 14. The cooling passage 24 extends through a region which is in the vicinity of the lower portion of the hydrodesulfurization unit 3. The cooling passage 24 is provided with the flow regulator 23. The flow regulator 23 is configured to adjust the flow rate of the air flowing through the cooling passage 24, and may be constituted by an on-off valve or a flow control valve. The air flowing through the cooling passage 24 provides heat removal from the hydrodesulfurization unit 3, thereby cooling the hydrodesulfurization unit 3.

The controller 29 may be configured in any way so long as the controller 29 is the device which is able to control the components of the hydrogen generator 1. The controller 29 includes a processor section such as a microprocessor, a CPU, etc., a storage section which contains programs which are executed to perform control processes, such as a memory, and a timer unit having a time measuring function. The processor section of the controller 29 reads a specified control program stored in the storage section and executes the program to process the information, and perform the control processes regarding the hydrogen generator 1, including the control for the components and associated information of the hydrogen generator 1.

The controller 29 may be configured as a single controller or a control group of a plurality of controllers which cooperate with each other to execute the control for the hydrogen generator 1. Or, the controller 29 may be configured as microcontrol, and may be a MPU, a PLC (programmable logic controller), a logic circuit, etc..

### [Operation of hydrogen generator]

Next, the operation of the hydrogen generator 1 according to Embodiment 1 will be described with reference to Figs. 1 and 2. The hydrogen generation operation of the hydrogen generator 1 is performed as in the hydrogen generation operation of a general hydrogen generator, and will not be described in detail. Hereinafter, the operation for controlling the temperature of the hydrodesulfurization unit 3 will be described.

Fig. 2 is a flowchart showing the outline of the operation of the hydrogen generator according to Embodiment 1.

As shown in Fig. 2, the controller 29 obtains a temperature T detected by the first temperature detector 21, from the first temperature detector 21 (step S101). Then, the controller 29 determines whether or not the temperature T obtained in step S101 is higher than a preset first temperature threshold T1 (step S102). The first temperature threshold T1 may be set as desired depending on the hydrodesulfurization catalyst included in the hydrodesulfurization unit 3, and may be set to 290 degrees C which is equal to the set temperature of the lower portion of the hydrodesulfurization unit 3.

When the controller 29 determines that the temperature T is equal to or lower than the first temperature threshold T1 (No in step S102), the controller 29 returns to step S101, and repeats step S101 and step S102 until the temperature T exceeds the first temperature threshold T1.

On the other hand, when the controller 29 determines that the temperature T is higher than the first temperature threshold T1 (Yes in step S102), the controller 29 causes the flow regulator 23 to increase the flow rate of the air flowing through the cooling passage 24 (step S103), and terminates the present program.

### [Advantage of hydrogen generator]

In the hydrogen generator 1 according to Embodiment 1 configured as described above, for example, if the ambient temperature is increased and thereby the temperature of the hydrodesulfurization unit 3 is increased, the flow regulator 23 increases the flow rate of the air flowing through the cooling passage 24, thereby cooling the hydrodesulfurization unit 3.

This makes it possible to prevent a situation in which the catalyst of the hydrodesulfurization unit 3 is degraded due to a temperature increase which exceeds the set temperature of the hydrodesulfurization unit 3. In addition, the temperature of the hydrodesulfurization unit 3 can be maintained at a proper one, and degradation of the performance of the hydrodesulfurization unit 3 can be suppressed.

### (Embodiment 2)

In a hydrogen generator according to Embodiment 2, the heater is configured to heat the hydrodesulfurization unit by heat transfer of a combustion exhaust gas generated by combustion in the combustor, and the controller is configured to perform control to cause a flow rate of the combustion gas supplied to the combustor to be lower, when the temperature detected by the desulfurization temperature detector is higher than the first temperature threshold than when the temperature detected by the desulfurization temperature detector is equal to or lower than the first temperature threshold.

In addition, in the hydrogen generator according to Embodiment 2, the controller is configured to perform control to cause a flow rate of the air supplied to the combustor to be lower, when the temperature detected by the desulfurization temperature detector is higher than the first temperature threshold than when the temperature detected by the desulfurization temperature detector is equal to or lower than the first temperature threshold.

Hereinafter, an example of the hydrogen generator according to Embodiment 2 will be described with reference to Figs. 3 and 4.

### [Configuration of hydrogen generator]

Fig. 3 is a block diagram showing the schematic configuration of the hydrogen generator according to Embodiment 2.

As shown in Fig. 3, the configuration of the hydrogen generator 1 according to Embodiment 2 is basically the same as that of the hydrogen generator 1 according to Embodiment 1 except that the heater 30 is constituted by the reformed gas passage 15. Specifically, the hydrodesulfurization unit 3 and the reformer 9 are disposed to sandwich the reformed gas passage 15 between them.

More specifically, the reformed gas passage 15 extends downward from the lower end of the reformer 9, then extends upward along the reformer 9, and is turned back. The reformed gas passage 15 is adjacent to the hydrodesulfurization unit 3 with the wall defining the casing 35 placed between the hydrodesulfurization unit 3 and the reformed gas passage 15.

In this configuration, the reformer 9 is heated by the heat transfer of the combustion exhaust gas generated in the combustor 10, and the hydrogen-containing gas generated in the reformer 9 is heated by the heat transfer from the reformer 9 while the hydrogen-containing gas is flowing through the reformed gas passage 15. Then, the hydrodesulfurization unit 3 is heated by the heat transfer from the hydrogen-containing gas flowing through the reformed gas passage 15.

### [Operation of hydrogen generator]

Next, the operation of the hydrogen generator 1 according to Embodiment 2 will be described with reference to Figs. 3 and 4.

Fig. 4 is a flowchart showing the outline of the operation of the hydrogen generator according to Embodiment 2.

As shown in Fig. 4, step S101 to step S103 of the operation for controlling the temperature of the hydrodesulfurization unit 3 in the hydrogen generator 1 according to Embodiment 2 are the same as step S101 to step S103 of the operation for controlling the temperature of the hydrodesulfurization unit 3 in the hydrogen generator 1 according to Embodiment 1, but step S104 and the following steps are different.

After the controller 29 caused the flow regulator 23 to increase the flow rate of the air flowing through the cooling passage 24 in step S103, the controller 29 causes the raw material supply unit 2 to decrease the supply amount of the raw material (step S104). Specifically, the controller 29 controls the raw material supply unit 2 to cause the amount of the raw material supplied to the reformer 9 to be smaller, when the detected temperature T is higher than the first temperature threshold T1 than when the detected temperature T is equal or lower than the first temperature threshold T1.

As a result, the amount of the hydrogen-containing gas generated in the reformer 2 is decreased, and the flow rate of the hydrogen-containing gas flowing through the reformed gas passage 15 is decreased correspondingly. This can lessen the heat transfer to the hydrodesulfurization unit 3, and lower the temperature of the hydrodesulfurization unit 3. In addition, the amount of the raw material supplied to the reformer 9 is decreased, and thereby the raw material and the hydrogen-containing gas which are supplied as the combustion gas to the combustor 10 are decreased.

Then, the controller 29 causes the air supply unit 13 to decrease the supply amount of air (step S105), and terminates the present program. Specifically, the controller 29 controls the air supply unit 13 to cause the amount of the air supplied to the combustor 10 to be smaller, when the detected temperature T is higher than the first temperature threshold T1 than when the detected temperature T is equal or lower than the first temperature threshold T1.

As a result, the flow rate of the combustion gas supplied to the combustor 10 and the flow rate of the air supplied to the combustor 10 are decreased, and correspondingly, the amount of the combustion exhaust gas generated in the combustor 10 is decreased. This make it possible to decrease the amount of heat transferred from the combustion exhaust gas to the hydrodesulfurization unit 3 via the reformer 9 and the reformed gas passage 15, and thereby lower the temperature of the hydrodesulfurization unit 3.

The hydrogen generator 1 according to Embodiment 2 configured as described above can achieve advantages as those of the hydrogen generator 1 according to Embodiment 1. In addition, the hydrogen generator 1 according to Embodiment 2 can cause the temperature of the hydrodesulfurization unit 3 to be lower than the hydrogen generator 1 according to Embodiment 1. This allows the temperature of the hydrodesulfurization unit 3 to be maintained at a set temperature even in a high-temperature ambience.

Although in Embodiment 2, the raw material supply unit 2 and the air supply unit 13 are controlled to decrease the raw material and the air in amount, respectively, the present invention is not limited to this, and only one of the raw material supply unit 2 and the air supply unit 13 may be controlled to decrease only one of the raw material and the air in amount.

### [Modified example 1]

Next, modified example of the hydrogen generator 1 according to Embodiment 2 will be described.

The hydrogen generator 1 according to Modified example 1 of Embodiment 2 is the hydrogen generator 1 according to Embodiment 1 or 2, in which the heater is configured to heat the hydrodesulfurization unit by heat transfer of the combustion exhaust gas generated by combustion in the combustor, and the combustor is supplied with the combustion gas from the raw material supply unit via the reformer, and /or the raw material as the combustion gas from the raw material supply unit.

Hereinafter, an example of the hydrogen generator according to Modified example 1 of Embodiment 2 will be described with reference to Fig. 5.

Fig. 5 is a block diagram showing the schematic configuration of the hydrogen generator according to Modified example 1 of Embodiment 2.

As shown in Fig. 5, the configuration of the hydrogen generator 1 according to Modified example 1 is basically the same as that of the hydrogen generator 1 according to Embodiment 2 except that the combustor 10 is supplied with the raw material from the raw material supply unit 2 via a first raw material supply passage 36 (by bypassing the reformer 9), as well as the raw material or the hydrogen-containing gas as the combustion gas from the raw material supply unit 2 via the reformer 9.

Specifically, the upstream end of the first raw material supply passage 36 is connected to the raw material supply passage 4, while the downstream end of the first raw material supply passage 36 is connected to the combustor 10. The first raw material supply passage 36 is provided with a third valve 37. The third valve 37 is configured to adjust (control) the flow rate of the raw material flowing through the first raw material supply passage 36, and may be an on-off valve or a flow control valve.

The hydrogen generator 1 of Modified example 1 configured as described above can achieve advantages as those of the hydrogen generator 1 according to Embodiment 2. Although in the hydrogen generator 1 of Modified example 1, the downstream end of the first raw material supply passage 36 is connected to the combustor 10, the present invention is not limited to this, and the downstream end of the first raw material supply passage 36 may be connected to the bypass passage 11.

### [Modified example 2]

A hydrogen generator according to Modified example 2 of Embodiment 2 is the hydrogen generator according to Embodiment 1 or 2 (including modified examples), in which the controller performs control to cause the flow rate of the air supplied to the cooling passage to be increased when the temperature detected by the desulfurization temperature detector is higher than the first temperature threshold, and to cause the flow rate of the combustion gas supplied to the combustor and the flow rate of the air supplied to the combustor to be decreased, when the temperature detected by the desulfurization temperature detector is higher than a third temperature threshold after a passage of a first predetermined time which is preset.

Hereinafter, an example of the hydrogen generator according to Modified example 2 of Embodiment 2 will be described with reference to Fig. 6. The configuration of the hydrogen generator 1 according to Modified example 2 is the same as that of the hydrogen generator 1 according to Embodiment 1 or Modified example 1 of Embodiment 2, and will not be described in detail repeatedly.

Fig. 6 is a flowchart showing the outline of the operation of the hydrogen generator according to Modified example 2 of Embodiment 2.

As shown in Fig. 6, step S201 to step S203 of the operation for controlling the temperature of the hydrodesulfurization unit 3 in the hydrogen generator 1 according to Modified example 2 are the same as step S101 to step S103 of the operation for controlling the temperature of the hydrodesulfurization unit 3 in the hydrogen generator 1 according to Embodiment 1, but S204 and the following steps are different.

After the controller 29 caused the flow regulator 23 to increase the flow rate of the air flowing through the cooling passage 24 in step S203, the controller 29 determines whether or not a first predetermined time has passed. The first predetermined time may be set to a desired value based on the length of a pipe constituting the cooling passage 24, the flow rate of the air flowing through the cooling passage 24, etc.. The first predetermined time may be, for example, 5 minutes or 10 minutes.

When the controller 29 determines that the first predetermined time has passed (Yes in step S204), the controller 29 obtains the temperature T detected by the first temperature detector 21, from the first temperature detector 21 (step S205). Then, the controller 29 determines whether or not the temperature T obtained in step S205 is higher than a preset third temperature threshold T3 (step S206). The third temperature threshold T3 may be set to a desired value. The third temperature threshold T3 may be equal to the first temperature threshold T1, may be 5 degrees C lower than the first temperature threshold T1, or may be 10 degrees C lower than the first temperature threshold T1.

When the controller 29 determines that the temperature T is equal to or lower than the third temperature threshold T3 (No in step S206), the controller 29 returns to step S205, and repeats step S205 and step S206 until the temperature T exceeds the third temperature threshold T3.

On the other hand, when the controller 29 determines that the temperature T is higher than the third temperature threshold T3 (Yes in step S206), the controller 29 causes the raw material supply unit 2 to decrease the supply amount of the raw material (step S207), causes the air supply unit 13 to decrease the supply amount of the air (step S208), and terminates the present program.

### [Embodiment 3]

A hydrogen generator according to Embodiment 3 is the hydrogen generator according to Embodiment 1 or 2 (including modified examples), in which the controller performs control to cause the flow rate of the air supplied to the cooling passage to be lower, when the temperature detected by the desulfurization temperature detector is lower than a preset second temperature threshold which is lower than the first temperature threshold than when the temperature detected by the desulfurization temperature detector is equal to or higher than the second temperature threshold.

Hereinafter, an example of the hydrogen generator according to Embodiment 3 will be described with reference to Fig. 7. The configuration of the hydrogen generator 1 according to Embodiment 3 is the same as that of the hydrogen generator according to Embodiment I or Embodiment 2 (including modified examples), and will not be described in detail repeatedly.

Fig. 7 is a flowchart showing the outline of the operation of the hydrogen generator according to Embodiment 3.

As shown in Fig. 7, step 301 to step S303 of the operation for controlling the temperature of the hydrodesulfurization unit 3 in the hydrogen generator 1 according to Embodiment 3 are the same as step S101 to step S103 of the operation for controlling the temperature of the hydrodesulfurization unit 3 in the hydrogen generator 1 according to Embodiment 1, but S304 and the following steps are different.

In step S304, the controller 29 obtains the temperature T detected by the first temperature detector 21, from the first temperature detector 21. Then, the controller 29 determines whether or not the temperature T obtained in step S304 is lower than a preset second temperature threshold T2 (step S305). The second temperature threshold T2 may be set to a desired value so long as the second temperature threshold T2 is lower than the first temperature threshold T1, within the set temperature range of the hydrodesulfurization unit 3. The second temperature threshold T2 may be, for example, 270 degrees C or 210 degrees C.

When the controller 29 determines that the temperature T is equal to or higher than the second temperature threshold T2 (No in step S305), the controller 29 returns to step S304 and repeats step S304 and step S305 until the the temperature T becomes lower than the second temperature threshold T2.

On the other hand, when the controller 29 determines that the temperature T is lower than the second temperature threshold T2 (Yes in step S305), the controller 29 causes the flow regulator 23 to decrease the flow rate of the air flowing through the cooling passage 24 (step S306) and returns to step S301.

More specifically, in step S306, the controller 29 controls the flow regulator 23 to cause the flow rate of the air flowing through the cooling passage 24 to be lower, when the temperature T is lower than the second temperature threshold T2 than when the temperature T is equal to or higher than the second temperature threshold T2. For example, the controller 29 controls the flow regulator 23 to cause the flow rate of the air flowing through the cooling passage 24 to be equal to the flow rate which is before the flow rate is increased in step S303.

In the above operation, even when the temperature of the hydrodesulfurization unit 3 is decreased and is going to fall below the set temperature of the hydrodesulfurization unit 3, the flow regulator 23 decreases the flow rate of the air flowing through the cooling passage 24. Thus, the cooling of the hydrodesulfurization unit 3 is suppressed and the temperature of the hydrodesulfurization unit 3 can be increased. This allows the hydrogen generator 1 according to Embodiment 3 to maintain the temperature of the hydrodesulfurization unit 3 at a proper one as compared to the hydrogen generator according to Embodiment 1.

The hydrogen generator 1 according to Embodiment 3 configured as described above can achieve advantages as those of the hydrogen generator 1 according to Embodiment 1. In addition, in the hydrogen generator 1 according to Embodiment 3, since the flow regulator 23 increases or decreases the flow rate of the air flowing through the cooling passage 24, the temperature of the hydrodesulfurization unit 3 can be maintained at a proper temperature as compared to the hydrogen generator according to Embodiment 3.

### [Embodiment 4]

A hydrogen generator according to Embodiment 4 is the hydrogen generator according to any one of Embodiment 1 to Embodiment 3 (including modified examples), in which the controller performs control to cause the flow rate of the combustion gas supplied to the combustor to be higher, when the temperature detected by the desulfurization temperature detector is lower than the second temperature threshold than when the temperature detected by the desulfurization temperature detector is equal to or higher than the second temperature threshold.

In the hydrogen generator according to Embodiment 4, the controller may perform control to cause the flow rate of the air supplied to the combustor to be higher, when the temperature detected by the desulfurization temperature detector is lower than the preset second temperature threshold which is lower than the first temperature threshold than when the temperature detected by the desulfurization temperature detector is equal to or higher than the second temperature threshold.

Hereinafter, an example of the hydrogen generator according to Embodiment 4 will be described with reference to Figs. 8A and 8B. The configuration of the hydrogen generator 1 according to Embodiment 4 is the same as that of the hydrogen generator I according to Embodiment 1 or Embodiment 2 (including modified examples), and will not be described in detail repeatedly.

Figs. 8A and 8B are flowcharts showing the outline of the operation of the hydrogen generator according to Embodiment 4.

As shown in Figs. 8A and 8B, step 401 to step S405 of the operation for controlling the temperature of the hydrodesulfurization unit 3 in the hydrogen generator 1 according to Embodiment 4 are the same as step S101 to step S105 of the operation for controlling the temperature of the hydrodesulfurization unit 3 in the hydrogen generator 1 according to Embodiment 2, but step S406 and the following steps are different.

In step S406, the controller 29 obtains the temperature T detected by the first temperature detector 21, from the first temperature detector 21. Then, the controller 29 determines whether or not the temperature T obtained in step S406 is lower than the preset second temperature threshold T2 (step S407).

When the controller 29 determines that the temperature T is equal to or higher than the second temperature threshold T2 (No in step S407), the controller 29 returns to step S406 and repeats step S406 and step S407 until the the temperature T becomes lower than the second temperature threshold T2.

On the other hand, when the controller 29 determines that the temperature T is lower than the second temperature threshold T2 (Yes in step S407), the controller 29 causes the flow regulator 23 to decrease the flow rate of the air flowing through the cooling passage 24 (step S408), causes the raw material supply unit 2 to increase the supply amount of the raw material (step S409), causes the air supply unit 13 to increase the supply amount of the air (step S410), and returns to step S401.

More specifically, in step S408, the controller 29 controls the flow regulator 23 to cause the flow rate of the air flowing through the cooling passage 24 to be lower, when temperature T is lower than the second temperature threshold T2 than when the temperature T is equal to or higher than the second temperature threshold T2. For example, the controller 29 controls the flow regulator 23 to cause the flow rate of the air flowing through the cooling passage 24 to be equal to the flow rate which is before the flow rate is increased in step S403.

Further, in step S409, the controller 29 may control the raw material supply unit 2 to cause the flow rate of the combustion gas supplied to the combustor 10 via the reformer 9 and/or the first raw material supply passage 36 to be higher, when the temperature T is lower than the second temperature threshold T2 than when the temperature T is equal to or higher than the second temperature threshold T2. For example, the controller 29 may control the raw material supply unit 2 to cause the supply amount of the raw material to be equal to the supply amount which is before the supply amount is decreased in step S404.

Moreover, in step S410, the controller 29 may control the air supply unit 13 to cause the amount of the air supplied to the combustor 10 to be larger, when the temperature T is lower than the second temperature threshold T2 than when the temperature T is equal to or higher than the second temperature threshold T2. For example, the controller 29 may control the air supply unit 13 to cause the supply amount of the air to be equal to the supply amount which is before the supply amount is decreased in step S405.

In the above operation, even when the temperature of the hydrodesulfurization unit 3 is decreased to a temperature that is lower than the second temperature threshold T2 and is going to fall below the set temperature of the hydrodesulfurization unit 3, the flow regulator 23 decreases the flow rate of the air flowing through the cooling passage 24. Thus, the cooling of the hydrodesulfurization unit 3 is suppressed and the temperature of the hydrodesulfurization unit 3 can be increased.

When the temperature of the hydrodesulfurization unit 3 becomes lower than the second temperature threshold T2, the amount of the raw material supplied to the reformer 9 is increased. Thereby, the amount of the hydrogen-containing gas generated in the reformer 9 is increased and the flow rate of the hydrogen-containing gas flowing through the reformed gas passage 15 is increased. This can increase the amount of heat transferred to the hydrodesulfurization unit 3, and raise the temperature of the hydrodesulfurization unit 3. Since the amount of the raw material supplied to the reformer 9 is increased, the raw material and the hydrogen-containing gas which are supplied as the combustion gas to the combustor 10 are increased.

When the temperature of the hydrodesulfurization unit 3 becomes lower than the second temperature threshold T2, the amount of the air supplied to the combustor 10 is increased. Thereby, the flow rate of the combustion gas supplied to the combustor 10 and the flow rate of the air supplied to the combustor 10 are increased, and thereby the flow rate of the combustion exhaust gas generated in the combustor 10 is increased. As a result, the amount of heat transferred from the combustion exhaust gas to the hydrodesulfurization unit 3 via the reformer 9 and the reformed gas passage 15 can be increased, and the temperature of the hydrodesulfurization unit 3 can be increased.

In the hydrogen generator 1 according to Embodiment 4, the temperature of the hydrodesulfurization unit 3 can be maintained at a proper temperature as compared to the hydrogen generator 1 according to Embodiment 2.

The hydrogen generator 1 according to Embodiment 4 configured as described above can achieve advantages as those of the hydrogen generator 1 according to Embodiment 1. In addition, in the hydrogen generator 1 according to Embodiment 4, the temperature of the hydrodesulfurization unit 3 can be maintained at a proper one as compared to the hydrogen generator 1 according to Embodiment 2.

### (Embodiment 5)

A hydrogen generator according to Embodiment 5 is is the hydrogen generator according to any one of Embodiment 1 to Embodiment 4 (including modified examples), which further comprises a shift converter and a selective oxidization unit.

Hereinafter, an example of the hydrogen generator according to Embodiment 5 will be described with reference to Figs. 9 and 10.

### [Configuration of hydrogen generator]

Fig. 9 is a view showing the schematic configuration of the hydrogen generator according to Embodiment 5.

As shown in Fig. 9, in the hydrogen generator 1 according to Embodiment 5, the casing 25 has a stepped-cylinder shape and is covered with a heat insulating material 20.

Inside the casing 35, a first tube 38, a second tube 39, and a radiation tube 40 which have a common center axis of the casing 35, are placed. Inside the radiation tube 40, the combustor 10 is placed. A tubular space formed between the second tube 39 and the radiation tube 40 constitutes the combustion exhaust gas passage 8.

The air supply unit 13 is connected to the combustor 10 via the air supply passage 14. The air supply passage 14 is provided with a passage throttle unit 27. The air supply passage 14 is provided with a heat insulating material 26 in a location that is downstream of the passage throttle unit 27. Although in Embodiment 5, the passage throttle unit 27 is provided, the present invention is not limited to this, and the passage throttle unit 27 may be omitted.

The upper portion of the tubular space formed between the first tube 38 and the second tube 39 constitutes the evaporator 6. The raw material supply passage 4 and the water supply passage 5 are connected to the evaporator 6. The evaporator 6 is provided with a spiral rod 7 wound in a spiral shape, on the outer surface of the second tube 39. This allows the raw material and water supplied to the evaporator 6 to flow in a spiral shape.

The reforming catalyst is filled into the lower portion of the tubular space formed between the first tube 38 and the second tube 39 and constitutes the reformer 9. The reformer 9 is provided with a reforming temperature sensor 28 for detecting the temperature of the reformer 9. The controller 29 is capable of calculating the amount of hydrogen generated in the reformer 9 based on the temperature detected by the reforming temperature sensor 28 and the amount of the raw material supplied to the reformer 9.

A gap is provided between the lower end of the first tube 38 and the bottom surface of the casing 35. A space formed between the lower end of the reformer 9 in the tubular space formed between the first tube 38 and the second tube 39, and the bottom surface of the casing 35, and a tubular space formed between the casing 35 and the first tube 38, constitute the reformed gas passage 15. A shift converter 16 and a CO removing unit 18 are provided in a portion formed by the stepped portion of the casing 35, of the tubular space formed between the casing 35 and the first tube 38.

The shift converter 16 includes a Cu-Zn based catalyst which reduces carbon monoxide in the hydrogen-containing gas through a shift reaction. The CO removing unit 18 includes a Ru based catalyst which reduces carbon monoxide from the hydrogen-containing gas through a selective oxidization reaction. A space is provided between the shift converter 16 and the CO removing unit 18. The air supply unit (not shown) for supplying oxygen (air) used in the selective oxidization reaction is connected to the space provided between the shift converter 16 and the CO removing unit 18, via the air supply passage 45. In this configuration, the air supplied from the air supply unit via the air supply passage 45 is mixed with the hydrogen-containing gas and supplied to the CO removing unit 18. The hydrogen-containing gas (fuel gas) from which carbon monoxide has been reduced by the CO removing unit 18 is supplied to a hydrogen consuming device (fuel cell) 12.

Although in Embodiment 5, the CO removing unit 18 reduces carbon monoxide through the selective oxidization reaction, the present invention is not limited to this, and the CO removing unit 18 may reduce carbon monoxide in the hydrogen-containing gas through a methanation reaction. In this case, oxygen is unnecessary, and therefore the air supply unit and the air supply passage 4 may be omitted.

The hydrodesulfurization unit 3 is provided on the lower portion of the stepped portion of the casing 35 via the heat insulating material 17. The first temperature detector 21 is attached on the lower portion of the hydrodesulfurization unit 3 to detect the temperature of the lower portion of the hydrodesulfurization unit 3. A second temperature detector 22 is attached on the upper portion of the hydrodesulfurization unit 3 to detect the temperature of the upper portion of the hydrodesulfurization unit 3.

The cooling passage 24 is placed adjacently to the lower end portion of the hydrodesulfurization unit 3. A portion of the cooling passage 24 is covered with the heat insulating material 20. A portion of the cooling passage 24 which portion is downstream of the portion which is adjacent to the hydrodesulfurization unit 3, is covered with the heat insulating material 26. As the heat insulating material 17, the heat insulating material 20, and the heat insulating material 26, for example, a heat insulating material comprising silica, titania, and alumina, or a mixture of these, a heat insulating material including a glass wool, etc., may be used.

### [Operation of hydrogen generator]

Next, the operation of the hydrogen generator according to Embodiment 5 will be described with reference to Fig. 8A to Fig. 11.

Fig. 10 is a graph showing an example of data in a case where the operation for controlling the temperature of the hydrodesulfurization unit of the hydrogen generator according to Embodiment 5. Fig. 10 shows the data obtained as a result of controlling the temperature of the hydrodesulfurization unit 3 on the basis of the flow of Figs. 8A and 8B described in Embodiment 4.

As shown in Fig. 10, when the first temperature detector 21 detects a temperature which is higher than the first temperature threshold T1 (in this example, 290 degrees C), the flow regulator 23 flows the air (combustion air) through the cooling passage 24, the raw material supply unit 2 decreases the supply amount of the raw material, and the air supply unit 13 decreases the air flow of the air.

Thereby, air (combustion air) cools the hydrodesulfurization unit 3 while flowing through the cooling passage 24. Since the supply amount of the raw material is decreased, the amount of hydrogen generated in the reformer 9 is decreased. Further since the combustion gas and the air supplied to the combustor 10 are decreased in amount, the flow rate of the combustion exhaust gas generated in the combustor 10 is decreased, and the heating amount of the hydrodesulfurization unit 3 is decreased. Therefore, the hydrodesulfurization unit 3 is cooled. The temperature of the air (combustion air) which has cooled the hydrodesulfurization unit 3 while flowing through the cooling passage 24 is increased.

When the first temperature detector 21 detects a temperature which is lower than the second temperature threshold T2 (in this example, 270 degrees C), the flow regulator 23 stops the flow of the air flowing to the cooling passage 24, the raw material supply unit 2 sets back the supply amount of the raw material to a previous one, and the air supply unit 13 sets back the flow rate of the air to a previous one.

Thereby, the air (combustion air) does not flow through the cooling passage 24, and the temperature of the hydrodesulfurization unit 3 is increased. Since the supply amount of the raw material is increased, the amount of hydrogen generated in the reformer 9 is increased. Since the combustion gas and the air supplied to the combustor 10 are increased in amount, the flow rate of the combustion exhaust gas generated in the combustor 10 is increased, and the heating amount of the hydrodesulfurization unit 3 is increased. As a result, the temperature of the hydrodesulfurization unit 3 is increased.

Since the flow regulator 23 increases or decreases the air flowing through the cooling passage 24, the raw material supply unit 2 increases or decreases the supply amount of the raw material, and the air supply unit 13 increases or decreases the amount of the air supplied to the combustor 10, in the above described manner, the temperature of the hydrodesulfurization unit 3 can be maintained at a proper one.

Fig. 11 is a graph showing another example of data in a case where the operation for controlling the temperature of the hydrodesulfurization unit of the hydrogen generator according to Embodiment 5. Fig. 11 shows the data obtained as a result of controlling the temperature of the hydrodesulfurization unit 3 on the basis of the flow of Figs. 8A and 8B described in Embodiment 4.

In the example of Fig. 11, the hydrogen generator 1 is performing a steady operation, and the first temperature detector 21 and the second temperature detector 22 are used as the desulfurization temperature detector. Also, in the example of Fig. 11, it is supposed that the reforming catalyst of the reformer 9 has been degraded with a passage of time, the raw material supply unit 2 is controlled to make the amount of the raw material supplied to the reformer 9 larger in this degraded state than before the reforming catalyst has been degraded, and the flow regulator 23 is controlled to flow the air with a small amount through the cooling passage 24.

As shown in Fig. 11, when the second temperature detector 22 detects a temperature which is lower than the second temperature threshold T2 (in this example, 210 degrees C), the flow regulator 23 stops the flow of the air flowing to the cooling passage 24, the raw material supply unit 2 increases the supply amount of the raw material, and the air supply unit 13 increases the flow rate of the air.

Thereby, the air (combustion air) does not flow through the cooling passage 24, and the temperature of the hydrodesulfurization unit 3 is increased. Since the supply amount of the raw material is increased, the amount of hydrogen generated in the reformer 9 is increased. Since the combustion gas and the air supplied to the combustor 10 are increased in amount, the flow rate of the combustion exhaust gas generated in the combustor 10 is increased, and the heating amount of the hydrodesulfurization unit 3 is increased. As a result, the temperature of the hydrodesulfurization unit 3 is increased.

When the temperature of the hydrodesulfurization unit 3 reaches a predetermined temperature, the flow regulator 23 flows the air with a small amount through the cooling passage 24, the raw material supply unit 2 sets back the supply amount of the raw material to a previous one, and the air supply unit 13 sets back the flow rate of the air to a previous one.

On the other hand, when the first temperature detector 21 detects a temperature which is higher than the first temperature threshold T1 (in this example, 290 degrees C), the flow regulator 23 increases the flow rate of the air (combustion air) flowing through the cooling passage 24, the raw material supply unit 2 decreases the supply amount of the raw material, and the air supply unit 13 decreases the flow rate of the air.

Thereby, the air (combustion air) cools the hydrodesulfurization unit 3 while flowing through the cooling passage 24. Since the supply amount of the raw material is decreased, the amount of hydrogen generated in the reformer 9 is decreased. Further, since the combustion gas and the air supplied to the combustor 10 are decreased in amount, the flow rate of the combustion exhaust gas generated in the combustor 10 is decreased, and the heating amount of the hydrodesulfurization unit 3 is decreased. Therefore, the hydrodesulfurization unit 3 is cooled.

Since the flow regulator 23 increases or decreases the air flowing through the cooling passage 24, the raw material supply unit 2 increases or decreases the supply amount of the raw material, and the air supply unit 13 increases or decreases the amount of the air supplied to the combustor 10, in the above described manner, the temperature of the hydrodesulfurization unit 3 can be maintained at a proper one.

The hydrogen generator 1 according to Embodiment 5 configured as described above can achieve advantages as those of the hydrogen generator 1 according to any one of Embodiment I to Embodiment 4 (including modified examples).

### (Embodiment 6)

A fuel cell system according to Embodiment 6 includes the hydrogen generator according to any one of Embodiment 1 to Embodiment 5 (including modified examples), and a fuel cell.

Hereinafter, an example of the fuel cell system according to Embodiment 6 will be described.

### [Configuration of fuel cell system]

Fig. 12 is a block diagram showing the schematic configuration of a fuel cell system according to Embodiment 6.

As shown in Fig. 12, a fuel cell system 100 according to Embodiment 6 includes the hydrogen generator 1 according to Embodiment 1, an oxidizing gas supply unit 42, and a fuel cell 12. The controller 29 of the hydrogen generator I is configured to control the components of the fuel cell system 100, as well as the components of the hydrogen generator 1.

The fuel cell 12 includes an anode (not shown) and a cathode (not shown). The configuration of the fuel cell 12 is the same as that of a general fuel cell, and will not be described in detail. As the fuel cell 12, a polymer electrolyte fuel cell, a phosphoric acid fuel cell, etc., may be used.

The hydrogen generator 1 is connected to the fuel cell 12 via the reformed gas passage 15. The combustor 10 is connected to the fuel cell 12 via an off-fuel-gas passage 41. The upstream end of the bypass passage 1 is connected to the reformed gas passage 15 in a location that is upstream of the first on-off valve 32, while the downstream end of the bypass passage 11 is connected to the off-fuel-gas passage 41.

In the above described configuration, the hydrogen-containing gas (fuel gas) generated in the hydrogen generator 1 is supplied to the anode of the fuel cell 12 via the reformed gas passage 15. The fuel gas which has not been consumed in the anode flows through the off-fuel-gas passage 41 and supplies as the combustion gas to the combustor 10.

The oxidizing gas supply unit 42 is connected to the fuel cell 12 via an oxidizing gas supply passage 43. The oxidizing gas supply unit 42 may be configured in any way so long as the oxidizing gas supply unit 42 is capable of supplying the oxidizing gas (air) with an adjusted flow rate to the cathode of the fuel cell 12. For example, the oxidizing gas supply unit 42 may be a fan unit such as a blower or a sirocco fan, a diaphragm air pump, etc., may be used.

In the fuel cell 12, electricity is generated through an electrochemical reaction between the fuel gas supplied to the anode and the oxidizing gas supplied to the cathode. The oxidizing gas which has not been consumed in the cathode flows through an oxidizing gas discharge passage 44 and is discharged to outside the fuel cell system 100.

In the fuel cell system 100 according to Embodiment 6, the reformer 9 of the hydrogen generator 1 is provided with the reforming temperature sensor 28. The controller 29 calculates the amount of hydrogen generated in the reformer 9 based on the temperature of the reformer 9 which is detected by the reforming temperature sensor 28 and the amount of the raw material supplied to the reformer 9.

In the temperature control for the hydrodesulfurization unit 3, when the amount of the raw material supplied from the raw material supply unit 2 is decreased, the controller 29 controls the raw material supply unit 2 and/or the air supply unit 13 such that the amount of hydrogen generated in the reformer 9 does not fall below a required hydrogen amount, corresponding to the output of the fuel cell 12. This makes it possible to carry out the temperature control for the hydrodesulfurization unit 3, without stopping the power generation operation of the fuel cell system 100.

The fuel cell system 100 according to Embodiment 6 configured as described above includes the hydrogen generator 1 according to Embodiment 1, and therefore, can achieve the same advantages as those of the hydrogen generator 1 according to Embodiment 1.

Although the fuel cell system 100 according to Embodiment 6 includes the hydrogen generator according to Embodiment 1, the present invention is not limited to this. The fuel cell system 100 according to Embodiment 6 may include the hydrogen generator according to any one of Embodiment 1 to Embodiment 5 (including modified examples).

Numerous improvements and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the scope of the invention as claimed.

### Industrial Applicability

A hydrogen generator, a fuel cell system including the hydrogen generator, a method of operating the hydrogen generator, and a method of operating the fuel cell system, of the present invention, can maintain the temperature of the hydrodesulfurization unit at a proper one, and suppress degradation of the performance of the hydrodesulfurization unit. Therefore, the hydrogen generator, the fuel cell system, the method of operating the hydrogen generator, and the method of operating the fuel cell system, of the present invention, are useful in the fields of the fuel cell.

### Reference Signs List

- 1: hydrogen generator
- 2: raw material supply unit
- 3: hydrodesulfurization unit
- 4: raw material supply passage
- 5: water supply passage
- 6: evaporator
- 7: spiral rod
- 8: combustion exhaust gas passage
- 9: reformer
- 10: combustor
- 11: bypass passage
- 12: fuel cell
- 13: air supply unit
- 14: air supply passage
- 15: reformed gas passage
- 16: shift converter
- 17: heat insulating material
- 18: CO removing unit
- 19: flow regulator
- 20: heat insulating material
- 21: first temperature detector
- 22: second temperature detector
- 23: flow regulator
- 24: cooling passage
- 26: heat insulating material
- 27: passage throttle unit
- 28: reforming temperature sensor
- 29: controller
- 30: heater
- 31: hydrogen-containing gas passage
- 32: first on-off valve
- 33: second on-off valve
- 34: water supply unit
- 35: casing
- 36: first raw material supply passage
- 37: third valve
- 38: first tube
- 39: second tube
- 40: radiation tube
- 41: off-fuel-gas passage
- 42: oxidizing gas supply unit
- 43: oxidizing gas supply passage
- 44: oxidizing gas discharge passage
- 45: air supply passage
- 100: fuel cell system

## Claims

1. A hydrogen generator (1) comprising:
a reformer (9) configured to reform a raw material containing hydrocarbon to generate a reformed gas;
a raw material supply unit (2) configured to supply a raw material to the reformer (9);
a combustor (10) configured to combust a combustion gas which is the raw material or the reformed gas, and air, to heat the reformer (9);
an air supply unit (13) configured to supply the air to the combustor (10);
a hydrodesulfurization unit (3) configured to remove a sulfur component from the raw material through a hydrogenation reaction;
a heater (30) configured to heat the hydrodesulfurization unit (3);
a desulfurization temperature detector (21) configured to detect a temperature of the hydrodesulfurization unit (3);
a reformed gas passage (15) configured to allow the reformed gas generated by the reformer (9) to flow;
a combustion exhaust gas passage (8) configured to allow a combustion exhaust gas generated in the combustor (10) to flow; and
a controller (29),
**characterized in that**
a cooling passage (24) configured to allow at least a part of the air supplied from the air supply unit to the combustor flow, through the cooling passage (24) to cool the hydrodesulfurization unit (3);
wherein when the temperature detected by the desulfurization temperature detector (21) is higher than a preset first temperature threshold (T1), the controller (29) is configured to perform control to cause a flow rate of the air supplied to the cooling passage (24) to be higher than the flow rate of the air which is supplied to the cooling passage (24) when the temperature detected by the desulfurization temperature detector (21) is equal to or lower than the first temperature threshold (T1),
the heater (30) is constituted by the combustion exhaust gas passage (8), the reformer (9) or the reformed gas passage (15).

2. The hydrogen generator according to claim 1, wherein the heater (30) is configured to heat the hydrodesulfurization unit (3) by heat transfer of the combustion exhaust gas generated by combustion in the combustor (10), and
when the temperature detected by the desulfurization temperature detector (21) is higher than the first temperature threshold (T1), the controller (29) performs control to cause a flow rate of the combustion gas supplied to the combustor (10) to be lower than the flow rate of the combustion gas which is supplied to the combustor (10) when the temperature detected by the desulfurization temperature detector (21) is equal to or lower than the first temperature threshold (T1),.

3. The hydrogen generator according to claim 2, wherein when the temperature detected by the desulfurization temperature detector (21) is higher than the first temperature threshold (T1), the controller (29) is configured to perform control to cause a flow rate of the air supplied to the combustor (10) to be lower than the flow rate of the air which is supplied to the combustor (10) when the temperature detected by the desulfurization temperature detector (21) is equal to or lower than the first temperature threshold (T1).

4. The hydrogen generator according to any one of claims 1 to 3, wherein when the temperature detected by the desulfurization temperature detector (21) is lower than a second predetermined temperature threshold (T2) which is lower than the preset first temperature threshold (T1), the controller (29) performs control to cause a flow rate of the air supplied to the cooling passage (24) to be lower than the flow rate of the air which is supplied to the cooling passage (24) when the temperature detected by the desulfurization temperature detector (21) is equal to or higher than the second temperature threshold (T2).

5. The hydrogen generator according to claim 4, wherein when the temperature detected by the desulfurization temperature detector (21) is lower than the second predetermined temperature threshold (T2), the controller (29) performs control to cause a flow rate of the combustion gas supplied to the combustor (10) to be higher than the flow rate of the combustion gas which is supplied to the combustor (10) when the temperature detected by the desulfurization temperature detector (21) is equal to or higher than the second temperature threshold (T2).

6. The hydrogen generator according to claim 5, wherein when the temperature detected by the desulfurization temperature detector (21) is lower than the preset second temperature threshold (T2) which is lower than the first temperature threshold (T1) the controller (29) performs control to cause a flow rate of the air supplied to the combustor (10) to be higher than the flow rate of the air which is supplied to the combustor (10) when the temperature detected by the desulfurization temperature detector (21) is equal to or higher than the second temperature threshold (T1).

7. A fuel cell system (100) comprising:
the hydrogen generator as recited in any one of claims 1 to 6; and
a fuel cell (12) configured to generate electric power by using the reformed gas generated in the hydrogen generator (1).

8. A method of operating a hydrogen generator (1),
the hydrogen generator including: a reformer (9) which reforms a raw material containing hydrocarbon to generate a reformed gas; a raw material supply unit (2) which supplies a raw material to the reformer (9); a combustor (10) configured to combust a combustion gas which is the raw material or the reformed gas, and air, to heat the reformer (10); an air supply unit (13) which supplies the air to the combustor (10); a hydrodesulfurization unit (3) which removes a sulfur component from the raw material through a hydrogenation reaction; a heater (30) which heats the hydrodesulfurization unit (3); a desulfurization temperature detector (21) which detects a temperature of the hydrodesulfurization unit (3); a reformed gas passage (15) through which the reformed gas generated by the reformer (9) flows; and a combustion exhaust gas passage (8) through which a combustion exhaust gas generated in the combustor (10) flows,
**characterized in that**
the hydrogen generator (1) further comprises
a cooling passage (24) through which at least a part of the air supplied from the air supply unit (13) to the combustor (10) flows, to cool the hydrodesulfurization unit (3); and a flow regulator (23) provided on the cooling passage (24) to adjust a flow rate of the air flowing through the cooling passage (24),
wherein the heater (30) is constituted by the combustion exhaust gas passage (8) the reformer (9) or the reformed gas passage (15),
the method comprising the steps of:
(a) determining whether or not the temperature detected by the desulfurization temperature detector (21) is higher than a preset first temperature threshold (T1); and
(b) when it is determined that the temperature detected by the desulfurization temperature detector (21) is higher than the first temperature threshold (T1) in step (a), causing, with the flow regulator (19), a flow rate of the air flowing through the cooling passage (24) to be higher than the flow rate of the air flowing through the cooling passage (24) when it is determined that the temperature detected by the desulfurization temperature detector (21) is equal to or lower than the first temperature threshold (T1).

9. The method of operating the hydrogen generator according to claim 8, wherein the heater (30) heats the hydrodesulfurization unit (3) by heat transfer of a combustion exhaust gas generated by combustion in the combustor (10), and
the combustor (29) is supplied with the combustion gas from the raw material supply unit (2) via the reformer (9), and /or the raw material as the combustion gas from the raw material supply unit (2),
the method further comprising:
(c) when it is determined that the temperature detected by the desulfurization temperature detector (21) is higher than the first temperature threshold (T1) in step (a), causing, with the raw material supply unit (2), a supply amount of the raw material to be smaller than the supply amount of the raw material which is supplied when it is determined that the temperature detected by the desulfurization temperature detector (21) is equal to or lower than the first temperature threshold (T1).

10. The method of operating the hydrogen generator according to claim 9, further comprising: (d) when it is determined that the temperature detected by the desulfurization temperature detector (21) is higher than the first temperature threshold (T1) in step (a), causing, with the air supply unit (13), an amount of the air supplied to the combustor (10) to be smaller than the amount of the air which is supplied to the combustor (10) when it is determined that the temperature detected by the desulfurization temperature detector (21) is equal to or lower than the first temperature threshold (T1) in step (a).

11. The method of operating the hydrogen generator according to any one of claims 8 to 10, further comprising:
(e) determining whether or not the temperature detected by the desulfurization temperature detector (21) is lower than a preset second temperature threshold (T2) which is lower than the first temperature threshold (T1); and
(f) when it is determined that the temperature detected by the desulfurization temperature detector (21) is lower than the second temperature threshold (T2) in step (e), causing, with the flow regulator (23), a flow rate of the air supplied to the cooling passage (24) to be lower than the flow rate of the air which is supplied to the cooling passage (24) when it is determined that the temperature detected by the desulfurization temperature detector (21) is equal to or higher than the second temperature threshold (T2) in step (e).

12. The method of operating the hydrogen generator according to claim 11, further comprising: (g) when it is determined that the temperature detected by the desulfurization temperature detector (21) is lower than the second temperature threshold (T2) in step (e), causing, with the raw material supply unit (2), a supply amount of the raw material to be larger than the supply amount of the raw material when it is determined that the temperature detected by the desulfurization temperature detector (21) is equal to or higher than the second temperature threshold (T2) in step (e).

13. The method of operating the hydrogen generator according to claim 12, further comprising: (g) when it is determined that the temperature detected by the desulfurization temperature detector (21) is lower than the second temperature threshold (T2) in step (e), causing, with the air supply unit (13), a flow rate of the air supplied to the combustor (10) to be higher than the flow rate of the air which is supplied to the combustor (10) when it is determined that the temperature detected by the desulfurization temperature detector (21) is equal to or higher than the second temperature threshold (T2) in step (e).

14. A method of operating a fuel cell system (100) comprising the method of operating the hydrogen generator (1) according to claim 8, whereby a fuel cell (12) generates electric power by using the reformed gas generated in the hydrogen generator (1).

## Patentansprüche

1. Wasserstoffgenerator (1), der umfasst:
einen Reformer (9), der ein Rohmaterial reformiert, das Kohlenwasserstoff enthält, um ein reformiertes Gas zu erzeugen;
eine Rohmaterialzuführungseinheit (2), die konfiguriert ist, um für den Reformer (9) ein Rohmaterial zuzuführen;
eine Brennkammer (10), die konfiguriert ist, um ein Brenngas, welches das Rohmaterial oder das reformierte Gas ist, und Luft zu verbrennen, um den Reformer (9) zu erwärmen;
eine Luftzuführungseinheit (13), die konfiguriert ist, um die Luft der Brennkammer (10) zuzuführen;
eine Hydroentschwefelungseinheit (3), die konfiguriert ist, um eine Schwefelkomponente durch eine Hydrierungsreaktion aus dem Rohmaterial zu entfernen;
eine Heizvorrichtung (30), die konfiguriert ist, um die Hydroentschwefelungseinheit (3) zu erwärmen;
ein Entschwefelungstemperaturdetektor (21), der konfiguriert ist, um eine Temperatur der Hydroentschwefelungseinheit (3) zu detektieren;
einen Kanal für reformiertes Gas (15), der konfiguriert ist, um zuzulassen, dass das durch den Reformer (9) erzeugte reformierte Gas strömt;
einen Verbrennungsabgaskanal (8), der konfiguriert ist, um zuzulassen, dass das in der Brennkammer (10) erzeugte Verbrennungsabgas strömt; und
eine Steuereinheit (29),
**dadurch gekennzeichnet, dass**
ein Kühlkanal (24) konfiguriert ist, um zuzulassen, dass wenigstens ein Teil der Luft, die von der Luftzuführungseinheit der Brennkammer zugeführt wird, durch den Kühlkanal (24) strömt, um die Hydroentschwefelungseinheit (3) zu kühlen;
wobei, wenn die durch den Entschwefelungstemperaturdetektor (21) detektierte Temperatur höher ist als ein voreingestellter erster Temperaturschwellenwert (T1), die Steuereinheit (29) konfiguriert ist, um eine Steuerung durchzuführen, die bewirkt, dass eine Strömungsrate der dem Kühlkanal (24) zugeführten Luft höher ist als die Strömungsrate der Luft, die dem Kühlkanal (24) zugeführt wird, wenn die durch den Entschwefelungstemperaturdetektor (21) detektierte Temperatur gleich oder niedriger ist als der erste Temperaturschwellenwert (T1),
wobei die Heizvorrichtung (30) durch den Verbrennungsabgaskanal (8), den Reformer (9) oder den Kanal für reformiertes Gas (15) gebildet wird.

2. Wasserstoffgenerator nach Anspruch 1, wobei die Heizvorrichtung (30) konfiguriert ist, um die Hydroentschwefelungseinheit (3) durch Wärmeübertragung eines durch Verbrennung in der Brennkammer (10) erzeugten Verbrennungsabgases zu erwärmen, und
wenn die durch den Entschwefelungstemperaturdetektor (21) detektierte Temperatur höher ist als der erste Temperaturschwellenwert (T1), die Steuereinheit (29) eine Steuerung durchführt, die bewirkt, dass eine Strömungsrate des der Brennkammer (10) zugeführten Brenngases niedriger ist als die Strömungsrate des Brenngases, das der Brennkammer (10) zugeführt wird, wenn die durch den Entschwefelungstemperaturdetektor (21) detektierte Temperatur gleich oder niedriger ist als der erste Temperaturschwellenwert (T1).

3. Wasserstoffgenerator nach Anspruch 2, wobei, wenn die durch den Entschwefelungstemperaturdetektor (21) detektierte Temperatur höher ist als der erste Temperaturschwellenwert (T1), die Steuereinheit (29) konfiguriert ist, um eine Steuerung durchzuführen, die bewirkt, dass eine Strömungsrate der der Brennkammer (10) zugeführten Luft niedriger ist als die Strömungsrate der Luft, die der Brennkammer (10) zugeführt wird, wenn die durch den Entschwefelungstemperaturdetektor (21) detektierte Temperatur gleich oder niedriger ist als der erste Temperaturschwellenwert (T1).

4. Wasserstoffgenerator nach einem der Ansprüche 1 bis 3, wobei, wenn die durch den Entschwefelungstemperaturdetektor (21) detektierte Temperatur niedriger ist als ein zweiter Temperaturschwellenwert (T2), der niedriger ist als der voreingestellte erste Temperaturschwellenwert (T1), die Steuereinheit (29) eine Steuerung durchführt, die bewirkt, dass eine Strömungsrate der dem Kühlkanal (24) zugeführten Luft niedriger ist als die Strömungsrate der Luft, die dem Kühlkanal (24) zugeführt wird, wenn die durch den Entschwefelungstemperaturdetektor (21) detektierte Temperatur gleich oder höher ist als der zweite Temperaturschwellenwert (T2).

5. Wasserstoffgenerator nach Anspruch 4, wobei, wenn die durch den Entschwefelungstemperaturdetektor (21) detektierte Temperatur niedriger ist als der zweite Temperaturschwellenwert (T2), die Steuereinheit (29) eine Steuerung durchführt, die bewirkt, dass eine Strömungsrate des der Brennkammer (10) zugeführten Brenngases höher ist als die Strömungsrate des Brenngases, das der Brennkammer (10) zugeführt wird, wenn die durch den Entschwefelungstemperaturdetektor (21) detektierte Temperatur gleich oder höher ist als der zweite Temperaturschwellenwert (T2).

6. Wasserstoffgenerator nach Anspruch 5, wobei, wenn die durch den Entschwefelungstemperaturdetektor (21) detektierte Temperatur niedriger ist als der voreingestellte zweite Temperaturschwellenwert (T2), der niedriger ist als der erste Temperaturschwellenwert (T1), die Steuereinheit (29) eine Steuerung durchführt, die bewirkt, dass eine Strömungsrate der der Brennkammer (10) zugeführten Luft höher ist als eine Strömungsrate der Luft, die der Brennkammer (10) zugeführt wird, wenn die durch den Entschwefelungstemperaturdetektor (10) detektierte Temperatur gleich oder höher ist als der zweite Temperaturschwellenwert (T2).

7. Brennstoffzellensystem (100), das umfasst:
den Wasserstoffgenerator nach einem der Ansprüche 1 bis 6; und
eine Brennstoffzelle (12), die konfiguriert ist, um elektrische Energie durch Verwendung des im Wasserstoffgenerator (1) erzeugten reformierten Gases zu erzeugen.

8. Verfahren zum Betreiben eines Wasserstoffgenerators (1),
wobei der Wasserstoffgenerator aufweist: einen Reformer (9), der ein Rohmaterial reformiert, das Kohlenwasserstoff enthält, um ein reformiertes Gas zu erzeugen; eine Rohmaterialzuführungseinheit (2), die dem Reformer (9) ein Rohmaterial zuführt; eine Brennkammer (10), die konfiguriert ist, um ein Brenngas, welches das Rohmaterial oder das reformierte Gas ist, und Luft zu verbrennen, um den Reformer (9) zu erwärmen; eine Luftzuführungseinheit (13), die die Luft der Brennkammer (10) zuführt; eine Hydroentschwefelungseinheit (3), die eine Schwefelkomponente durch eine Hydrierungsreaktion aus dem Rohmaterial entfernt; eine Heizvorrichtung (30), die die Hydroentschwefelungseinheit (3) erwärmt; einen Entschwefelungstemperaturdetektor (21), der eine Temperatur der Hydroentschwefelungseinheit (3) detektiert; einen Kanal für reformiertes Gas (15), durch den das durch den Reformer (9) reformierte Gas strömt; und einen Verbrennungsabgaskanal (8), durch den ein in der Brennkammer (10) erzeugtes Verbrennungsabgas strömt,
**dadurch gekennzeichnet, dass**
der Wasserstoffgenerator (1) des Weiteren umfasst:
einen Kühlkanal (24), durch den wenigstens ein Teil der Luft strömt, die von der Luftzuführungseinheit (13) der Brennkammer (10) zugeführt wird, um die Hydroentschwefelungseinheit (3) zu kühlen; und einen Strömungsregler (23), der an dem Kühlkanal (24) bereitgestellt wird, um eine Strömungsrate der durch den Kühlkanal (24) strömenden Luft einzustellen, wobei die Heizvorrichtung (30) durch den Verbrennungsabgaskanal (8), den Reformer (9) oder den Kanal für reformiertes Gas (15) gebildet wird,
wobei das Verfahren die Schritte umfasst:
(a) Bestimmen, ob die durch den Entschwefelungstemperaturdetektor (21) detektierte Temperatur höher ist als ein voreingestellter erster Temperaturschwellenwert (T1) oder nicht; und
(b) wenn in Schritt (a) bestimmt wird, dass die durch den Entschwefelungstemperaturdetektor (21) detektierte Temperatur höher ist als der erste Temperaturschwellenwert (T1), Bewirken mit dem Strömungsregler (19), dass eine Strömungsrate der durch den Kühlkanal (24) strömenden Luft höher ist, als die Strömungsrate der Luft, die durch den Kühlkanal (24) strömt, wenn bestimmt wird, dass die durch den Entschwefelungstemperaturdetektor (21) detektierte Temperatur gleich oder niedriger ist als der erste Temperaturschwellenwert (T1).

9. Verfahren zum Betreiben des Wasserstoffgenerators nach Anspruch 8, wobei die Heizvorrichtung (30) die Hydroentschwefelungseinheit (3) durch Wärmeübertragung eines Verbrennungsabgases erwärmt, das durch Verbrennung in der Brennkammer (10) erzeugt wird, wobei die Brennkammer (29) mit dem Brenngas aus der Rohmaterialzuführungseinheit (2) über den Reformer (9) und/oder dem Rohmaterial als dem Brenngas von der Rohmaterialzuführungseinheit (2) versorgt wird,
wobei das Verfahren des Weiteren umfasst:
(c) wenn in Schritt (a) bestimmt wird, dass die durch den Entschwefelungstemperaturdetektor (21) detektierte Temperatur höher ist als der erste Temperaturschwellenwert (T1), Bewirken mit der Rohmaterialzuführungseinheit (2), dass eine Zufuhrmenge des Rohmaterials kleiner ist als die Zufuhrmenge des Rohmaterials, das zugeführt wird, wenn bestimmt wird, dass die durch den Entschwefelungstemperaturdetektor (21) detektierte Temperatur gleich oder niedriger ist als der erste Temperaturschwellenwert (T1).

10. Verfahren zum Betreiben des Wasserstoffgenerators nach Anspruch 9, das des Weiteren umfasst:
(d) wenn in Schritt (a) bestimmt wird, dass die durch den Entschwefelungstemperaturdetektor (21) detektierte Temperatur höher ist als der erste Temperaturschwellwert (T1), Bewirken mit der Luftzuführungseinheit (13), dass eine der Brennkammer (10) zugeführte Luftmenge kleiner ist, als eine Luftmenge, die der Brennkammer (10) zugeführt wird, wenn in Schritt (a) bestimmt wird, dass die durch den Entschwefelungstemperaturdetektor (21) detektierte Temperatur gleich oder niedriger ist als der erste Temperaturschwellenwert (T1).

11. Verfahren zum Betreiben des Wasserstoffgenerators nach einem der Ansprüche 8 bis 10, das des Weiteren umfasst:
(e) Bestimmen, ob die durch den Entschwefelungstemperaturdetektor (21) detektierte Temperatur niedriger ist als ein voreingestellter zweiter Temperaturschwellenwert (T2), der niedriger ist als der erste Temperaturschwellenwert (T1), oder nicht; und
(f) wenn in Schritt (e) bestimmt wird, dass die durch den Entschwefelungstemperaturdetektor (21) detektierte Temperatur niedriger ist als der zweite Temperaturschwellenwert (T2), Bewirken mit dem Strömungsregler, dass eine Strömungsrate der dem Kühlkanal (24) zugeführten Luft niedriger ist als die Strömungsrate der dem Kühlkanal (24) zugeführten Luft, wenn in Schritt (e) bestimmt wird, dass die durch den Entschwefelungstemperaturdetektor (21) detektierte Temperatur gleich oder höher ist als der zweite Temperaturschwellenwert (T2).

12. Verfahren zum Betreiben des Wasserstoffgenerators nach Anspruch 11, das des Weiteren umfasst:
(g) wenn in Schritt (e) bestimmt wird, dass die durch den Entschwefelungstemperaturdetektor (21) detektierte Temperatur niedriger ist als der zweite Temperaturschwellenwert (T2), Bewirken mit der Rohmaterialzufuhreinheit (2), dass eine Zufuhrmenge des Rohmaterials größer ist als eine Zufuhrmenge des Rohmaterials, wenn in Schritt (e) bestimmt wird, dass die durch den Entschwefelungstemperaturdetektor (21) detektierte Temperatur gleich oder höher ist als der zweite Temperaturschwellenwert (T2).

13. Verfahren zum Betreiben des Wasserstoffgenerators nach Anspruch 12, das des Weiteren umfasst:
(g) wenn in Schritt (e) bestimmt wird, dass die durch den Entschwefelungstemperaturdetektor (21) detektierte Temperatur niedriger ist als der zweite Temperaturschwellenwert (T2), Bewirken mit der Luftzuführungseinheit (13), dass eine Strömungsrate der der Brennkammer (10) zugeführten Luft höher ist als die Strömungsrate der der Brennkammer (10) zugeführten Luft, wenn in Schritt (e) bestimmt wird, dass die durch den Entschwefelungstemperaturdetektor (21) detektierte Temperatur gleich oder höher ist als der zweite Temperaturschwellenwert (T2).

14. Verfahren zum Betreiben eines Brennstoffzellensystems (100):
das das Verfahren zum Betreiben des Wasserstoffgenerators (1) nach Anspruch 8 umfasst, wodurch eine Brennstoffzelle (12) elektrische Energie durch Verwenden des in dem Wasserstoffgenerator (1) erzeugten reformierten Gases erzeugt.

## Revendications

1. Générateur d'hydrogène (1) comprenant :
un dispositif de reformage (9) conçu pour reformer une matière première contenant un hydrocarbure afin de générer un gaz de reformage ;
une unité d'alimentation en matière première (2) conçue pour fournir une matière première au dispositif de reformage (9) ;
un dispositif de combustion (10) conçu pour brûler un gaz de combustion qui est la matière première ou le gaz de reformage, et de l'air, pour chauffer le dispositif de reformage (9) ;
une unité d'alimentation en air (13) conçue pour fournir de l'air à l'unité de combustion (10) ;
une unité d'hydrodésulfuration (3) conçue pour éliminer un composé soufré de la matière première par le biais d'une réaction d'hydrogénation ;
un dispositif de chauffage (30) conçu pour chauffer l'unité d'hydrodésulfuration (3) ;
un détecteur de température de désulfuration (21) conçu pour détecter une température de l'unité d'hydrodésulfuration (3) ;
un passage de gaz de reformage (15) conçu pour laisser s'écouler le gaz de reformage généré par l'unité de reformage (9) ;
un passage de gaz d'échappement de combustion (8) conçu pour laisser s'écouler un gaz d'échappement de combustion généré dans le dispositif de combustion (10) ; et
un module de commande (29),
**caractérisé en ce que**
un passage de refroidissement (24) conçu pour laisser s'écouler au moins une partie de l'air fourni par l'unité d'alimentation en air au dispositif de combustion, à travers le passage de refroidissement (24) afin de refroidir l'unité d'hydrodésulfuration (3) ;
où lorsque la température détectée par le détecteur de température de désulfuration (21) est supérieure à un premier seuil de température (T1) prédéfini, le module de commande (29) est configuré pour effectuer une commande destinée à amener un débit de l'air fourni au passage de refroidissement (24) à être supérieur au débit de l'air qui est fourni au passage de refroidissement (24) lorsque la température détectée par le détecteur de température de désulfuration (21) est inférieure ou égale au premier seuil de température (T1),
le dispositif de chauffage (30) est constitué par le passage de gaz d'échappement de combustion (8), le dispositif de reformage (9) ou le passage de gaz de reformage (15).

2. Générateur d'hydrogène selon la revendication 1, dans lequel le dispositif de chauffage (30) est conçu pour chauffer l'unité d'hydrodésulfuration (3) par transfert thermique du gaz d'échappement de combustion généré par la combustion dans le dispositif de combustion (10) et
lorsque la température détectée par le détecteur de température de désulfuration (21) est supérieure au premier seuil de température (T1), le module de commande (29) effectue une commande destinée à amener un débit du gaz de combustion fourni au dispositif de combustion (10) à être inférieur au débit de gaz de combustion qui est fourni au dispositif de combustion (10) lorsque la température détectée par le détecteur de température de désulfuration (21) est inférieure ou égale au premier seuil de température (T1),.

3. Générateur d'hydrogène selon la revendication 2, dans lequel lorsque la température détectée par le détecteur de température de désulfuration (21) est supérieure au premier seuil de température (T1), le module de commande (29) est configuré pour effectuer une commande destinée à amener un débit de l'air fourni au dispositif de combustion (10) à être inférieur au débit de l'air qui est fourni au dispositif de combustion (10) lorsque la température détectée par le détecteur de température de désulfuration (21) est inférieure ou égale au premier seuil de température (T1).

4. Générateur d'hydrogène selon l'une quelconque des revendications 1 à 3, dans lequel lorsque la température détectée par le détecteur de température de désulfuration (21) est inférieure à un second seuil de température (T2) prédéterminé qui est inférieur au premier seuil de température (T1) prédéfini, le module de commande (29) effectue une commande destinée à amener un débit de l'air fourni au passage de refroidissement (24) à être inférieur au débit de l'air qui est fourni au passage de refroidissement (24) lorsque la température détectée par le détecteur de température de désulfuration (21) est supérieure ou égale au second seuil de température (T2).

5. Générateur d'hydrogène selon la revendication 4, dans lequel lorsque la température détectée par le détecteur de température de désulfuration (21) est inférieure au second seuil de température (T2) prédéterminé, le module de commande (29) effectue une commande destinée à amener un débit du gaz de combustion fourni au dispositif de combustion (10) à être supérieur au débit du gaz de combustion qui est fourni au dispositif de combustion (10) lorsque la température détectée par le détecteur de température de désulfuration (21) est supérieure ou égale au second seuil de température (T2).

6. Générateur d'hydrogène selon la revendication 5, dans lequel lorsque la température détectée par le détecteur de température de désulfuration (21) est inférieure au second seuil de température (T2) prédéfini qui est inférieur au premier seuil de température (T1), le module de commande (29) effectue une commande destinée à amener un débit de l'air fourni au dispositif de combustion (10) à être supérieur au débit de l'air qui est fourni au dispositif de combustion (10) lorsque la température détectée par le détecteur de température de désulfuration (21) est supérieure ou égale au second seuil de température (T1).

7. Système de pile à combustible (100) comprenant :
le générateur d'hydrogène tel que décrit dans l'une quelconque des revendications 1 à 6 ; et
une pile à combustible (12) conçue pour générer de la puissance électrique en utilisant le gaz de reformage généré dans le générateur d'hydrogène (1).

8. Procédé de fonctionnement d'un générateur d'hydrogène (1),
le générateur d'hydrogène incluant : un dispositif de reformage (9) qui réalise le reformage d'une matière première contenant un hydrocarbure afin de générer un gaz de reformage ; une unité d'alimentation en matière première (2) qui fournit une matière première au dispositif de reformage (9) ; un dispositif de combustion (10) conçu pour brûler un gaz de combustion qui est la matière première ou le gaz de reformage, et de l'air, pour chauffer le dispositif de reformage (10) ; une unité d'alimentation en air (13) qui fournit l'air à l'unité de combustion (10) ; une unité d'hydrodésulfuration (3) qui élimine un composé soufré de la matière première par le biais d'une réaction d'hydrogénation ; un dispositif de chauffage (30) qui chauffe l'unité d'hydrodésulfuration (3) ; un détecteur de température de désulfuration (21) qui détecte une température de l'unité d'hydrodésulfuration (3) ; un passage de gaz de reformage (15) à travers lequel s'écoule le gaz de reformage généré par l'unité de reformage (9) ; et un passage de gaz d'échappement de combustion (8) à travers lequel s'écoule un gaz d'échappement de combustion généré dans le dispositif de combustion (10) ;
**caractérisé en ce que**
le générateur d'hydrogène (1) comprend en outre
un passage de refroidissement (24) à travers lequel s'écoule au moins une partie de l'air fourni par l'unité d'alimentation en air (13) au dispositif de combustion (10), afin de refroidir l'unité d'hydrodésulfuration (3) ; et un régulateur de débit (23) situé sur le passage de refroidissement (24) pour régler un débit de l'air qui s'écoule à travers le passage de refroidissement (24),
le dispositif de chauffage (30) étant constitué par le passage de gaz d'échappement de combustion (8), le dispositif de reformage (9) ou le passage de gaz de reformage (15),
le procédé comprenant les étapes consistant :
(a) à déterminer si la température détectée par le détecteur de température de désulfuration (21) est supérieure à un premier seuil de température (T1) prédéfini ; et
(b) lorsqu'on a déterminé que la température détectée par le détecteur de température de désulfuration (21) est supérieure à un premier seuil de température (T1) à l'étape (a), à amener, avec le régulateur de débit (19), un débit de l'air s'écoulant dans le passage de refroidissement (24) à être supérieur au débit de l'air s'écoulant dans le passage de refroidissement (24) lorsqu'on a déterminé que la température détectée par le détecteur de température de désulfuration (21) est inférieure ou égale au premier seuil de température (T1).

9. Procédé de fonctionnement du générateur d'hydrogène selon la revendication 8, dans lequel le dispositif de chauffage (30) chauffe l'unité de désulfuration (3) par transfert thermique d'un gaz d'échappement de combustion généré par la combustion dans le dispositif de combustion (10) et
le dispositif de combustion (29) est alimenté avec le gaz de combustion provenant de l'unité d'alimentation en matière première (2) par l'intermédiaire du dispositif de reformage (9), et/ou la matière première en tant que gaz de combustion provenant de l'unité d'alimentation en matière première (2),
le procédé consistant en outre :
(c) lorsqu'on a déterminé que la température détectée par le détecteur de température de désulfuration (21) est supérieure au premier seuil de température (T1) à l'étape (a), à amener, avec l'unité d'alimentation en matière première (2), une quantité fournie de la matière première à être inférieure à la quantité fournie de la matière première qui est fournie lorsqu'on a déterminé que la température détectée par le détecteur de température de désulfuration (21) est inférieure ou égale au premier seuil de température (T1).

10. Procédé de fonctionnement du générateur d'hydrogène selon la revendication 9, consistant en outre : (d) lorsqu'on a déterminé que la température détectée par le détecteur de température de désulfuration (21) est supérieure au premier seuil de température (T1) à l'étape (a), à amener, avec l'unité d'alimentation en air (13), une quantité de l'air fournie au dispositif de combustion (10) à être inférieure à la quantité de l'air qui est fournie au dispositif de combustion (10) lorsqu'on a déterminé que la température détectée par le détecteur de température de désulfuration (21) est inférieure ou égale au premier seuil de température (T1) à l'étape (a).

11. Procédé de fonctionnement du générateur d'hydrogène selon l'une quelconque des revendications 8 à 10, consistant en outre :
(e) à déterminer si la température détectée par le détecteur de température de désulfuration (21) est inférieure à un second seuil de température (T2) prédéfini qui est inférieur au premier seuil de température (T1) ; et
(f) lorsqu'on a déterminé que la température détectée par le détecteur de température de désulfuration (21) est inférieure au second seuil de température (T2) à l'étape (e), amener, avec le régulateur de débit (23), un débit de l'air fourni au passage de refroidissement (24) à être inférieur au débit de l'air qui est fourni au passage de refroidissement (24) lorsqu'on a déterminé que la température détectée par le détecteur de température de désulfuration (21) est supérieure ou égale au second seuil de température (T2) à l'étape (e).

12. Procédé de fonctionnement du générateur d'hydrogène selon la revendication 11, consistant en outre : (g) lorsqu'on a déterminé que la température détectée par le détecteur de température de désulfuration (21) est inférieure au second seuil de température (T2) à l'étape (e), amener, avec l'unité d'alimentation en matière première (2), une quantité d'alimentation de la matière première à être supérieure à la quantité d'alimentation de la matière première lorsqu'on a déterminé que la température détectée par le détecteur de température de désulfuration (21) est supérieure ou égale au second seuil de température (T2) à l'étape (e).

13. Procédé de fonctionnement du générateur d'hydrogène selon la revendication 12, consistant en outre : (g) lorsqu'on a déterminé que la température détectée par le détecteur de température de désulfuration (21) est inférieure au second seuil de température (T2) à l'étape (e), amener, avec l'unité d'alimentation en air (13), un débit de l'air fourni au dispositif de combustion (10) à être supérieur au débit de l'air fourni au dispositif de combustion (10) lorsqu'on a déterminé que la température détectée par le détecteur de température de désulfuration (21) est supérieure ou égale au second seuil de température (T2) à l'étape (e).

14. Procédé de fonctionnement d'un système de pile à combustible (100)
comprenant le procédé de fonctionnement du générateur d'hydrogène (1) selon la revendication 8, ce qui permet à une pile à combustible (12) de générer de la puissance électrique en utilisant le gaz de reformage généré dans le générateur d'hydrogène (1).
